# EUROPÄISCHE PATENTSCHRIFT

(11) **EP 3 880 445 B1**
(45) Veröffentlichungstag und Bekanntmachung des Hinweises auf die Patenterteilung: **08.03.2023**
(21) Anmeldenummer: 18807897.6
(22) Anmeldetag: 12.11.2018
(51) Int. Cl.: B29C 65/50, B29C 65/78, B29C 65/48, B29C 65/02

(54) **VERFAHREN ZUM HERSTELLEN VON FLEXIBLEN TUBENKÖRPERN FÜR VERPACKUNGSTUBEN, FLEXIBLER TUBENKÖRPER FÜR VERPACKUNGSTUBEN UND VORRICHTUNG ZUR HERSTELLUNG VON FLEXIBLEN TUBENKÖRPERN FÜR VERPACKUNGSTUBEN**
METHOD FOR PRODUCING FLEXIBLE TUBE BODIES FOR PACKAGING TUBES, FLEXIBLE TUBE BODY FOR PACKAGING TUBES, AND DEVICE FOR PRODUCING FLEXIBLE TUBE BODIES FOR PACKAGING TUBES
PROCÉDÉ POUR LA PRÉPARATION DE CORPS DE TUBES FLEXIBLES POUR DES TUBES D'EMBALLAGE, CORPS DE TUBE FLEXIBLE POUR DES TUBES D'EMBALLAGE ET DISPOSITIF POUR LA PRÉPARATION DE CORPS DE TUBES FLEXIBLES POUR DES TUBES D'EMBALLAGE

(43) Veröffentlichungstag der Anmeldung: 22.09.2021
(73) Patentinhaber: PackSys Global AG, 8630 Rüti ZH (CH)
(72) Erfinder: SCHUHN, Daniel, 8049 Zürich (CH); ESSER, Ulrich, 8630 Rüti (CH)
(74) Vertreter: Patent- und Rechtsanwälte Behrmann Wagner PartG mbB
(86) Internationale Anmeldenummer: PCT/EP2018/080957
(87) Internationale Veröffentlichungsnummer: WO 2020/098906

(56) Entgegenhaltungen:
- EP-A1- 1 884 348

## Beschreibung

Die vorliegende Erfindung betrifft ein Verfahren zum Herstellen von flexiblen Tubenkörpern für Verpackungstuben nach dem Oberbegriff des Patentanspruchs 1, sowie flexible Tubenkörper für Verpackungstuben gemäß dem Oberbegriff des Patentanspruchs 12. Ferner betrifft die vorliegende Erfindung eine Vorrichtung zur Herstellung von flexiblen Tubenkörpern für Verpackungstuben gemäß dem Oberbegriff des Patentanspruchs 18.

Gattungsgemäße Tubenkörper für Verpackungstuben, die Verfahren zu deren Herstellung und die Vorrichtungen zu deren Herstellung sind aus dem Stand der Technik in unterschiedlicher Ausprägung bekannt. Allgemein ist vorgesehen, dass ein, bevorzugt auf einer Außenseite eine Bedruckung aufweisendes, Foliensubstrat mit dessen Längsrandseiten zu einer Rohrform umgeformt und im Bereich der Längsrandseiten unter Ausbildung einer Längsschweißnaht verbunden bzw. verfestigt wird. Dabei ist es bereits seit langem bekannt, dass die Längsschweißnaht zur Herstellung des Tubenkörpers als überlappende Schweißnaht der Längsrandseiten gebildet werden kann. Das bedeutet, dass die Längsrandseiten des Foliensubstrats im Rahmen der Umformung zu einem Rohrkörper einen Überlapp aufweisen oder ausbilden, in dessen Bereich dann die Schweißnaht oder Längsschweißnaht ausgebildet oder angebracht wird. Vor dem Verschweißen kommt dabei im Überlappungsbereich die überlappende, d.h. die sich im Tubenäußeren befindliche Laminatkante bzw. Längsrandseite auf der überlappten, also der im Tubeninneren zu liegen kommenden Laminatkante bzw. Längsrandseite zu liegen.

Beispielsweise aus der EP 0 187 541 A2 ist ein entsprechendes Verfahren sowie mit dem Verfahren hergestellte Tubenkörper beschrieben. Aus zumindest zwei Gründen ist bei dem genannten Verfahren das Auftreten einer unbedruckten Linie im Bereich der Schweißnaht unvermeidbar. Einerseits wird beim Verpressen der beiden Längsrandseiten durch den Druck aus der überlappenden Kante stammendes Material, welches sich unterhalb des Druckbildes befindet, auf die überlappte Kante bzw. die überlappte Längsrandseite geschoben. Es findet also ein Fließen des Materials statt, welches eine Linie auf der Bedruckung der überlappten Längsrandseite ausbildet. Außerdem wird durch das Material, welches auf die Bedruckung gelangt ein nicht verschweißter Bereich ausgebildet, der durch eine Kerbwirkung eine Sollbruchstelle für die Schweißnaht darstellt.

Als alternative Lösung zu einer überlappenden Anordnung der Längsrandseiten des Foliensubstrats bei der Überführung in eine Rohrform zur Ausbildung eines flexiblen Tubenkörpers für Verpackungstuben ist ebenfalls seit längerem bekannt, die Längsschweißnaht als Stoßnaht auszubilden, bei der also die Längsrandseiten des Foliensubstrats auf Stoß zueinander angeordnet oder aneinander anliegend ausgerichtet werden und in der besagten Anordnung der Längsrandseiten die Längsschweißnaht ausgebildet wird. Dabei weisen die als Stoßnähte ausgebildeten Längschweißnähte oftmals und trotz innenseitiger oder außenseitiger Verstärkung eine gegenüber dem Laminat verminderte Stabilität auf, insbesondere weil beim Ausbilden der Stoßschweißnaht der in dem Foliensubstrat oftmals angeordnete Barriere-Layer überhaupt nicht - beispielsweise bei Aluminium - oder nur partiell - beispielsweise bei EVOH - verschweißbar ist. Der besagte Barriere-Layer steuert oftmals aber gleichzeitig einen wesentlichen Beitrag zur mechanischen Stabilität des Foliensubstrats bei, insbesondere also außerhalb des Bereichs der Längsschweißnaht.

Weitere Probleme können bei Längsschweißnähten in Form von Stoßnähten auch im Zusammenhang mit möglichen Verstärkungsstrukturen, beispielsweise an an sich bekannten innen oder außen aufgebrachten Verstärkungsstreifen auftreten. Beispielsweise können bei zu dicken Verstärkungsstreifen Probleme beim Anbringen des Tubenkopfes auftreten. Ebenfalls können zu dicke Verstärkungsstreifen zu Problemen beim Bilden oder Ausbilden der Endnaht der Verpackungstube führen, die nach dem Befüllen einer entsprechenden Verpackungstube ausgebildet wird.

Ebenfalls tritt im Zusammenhang mit Verfahren zur Herstellung von flexiblen Tubenkörpern aus einem, bevorzugt auf einer Außenseite einer Bedruckung aufweisenden Foliensubstrat, bei dem das Foliensubstrat zu einer Rohrform umgeformt und im Bereich der Längsrandseiten unter Ausbildung einer Stoß-Längsschweißnaht verbunden werden, das Problem auf, dass für Foliensubstrate mit einer Kunststoff-Barriereschicht oder Kunststoff-Barriere-Layer die Schweißenergie zur Ausbildung der Längsschweißnaht nur oder hauptsächlich bzw. mehrheitlich von außen, also vornehmlich im Bereich der Außenseite und damit im Bereich der Bedruckung zugeführt werden kann. Dabei ist ein Phasenübergang des Materials des Foliensubstrats von fest zu flüssig an zumindest einer oder häufiger noch an beiden Längsrandseiten, zur Ausbildung der Längsschweißnaht, an der Oberfläche des Foliensubstrats und damit auf der ggf. bedruckten Außenseite unumgänglich. Dies führt zu der Gefahr oder dem Problem, dass der Energieeintrag zur Bereitstellung der Schweißenergie zur Ausbildung der Längsschweißnaht ein Verrutschen der Bedruckung oder ein Auseinanderreißen der Bedruckung verursacht. Wird zur Vermeidung einer Beschädigung der Bedruckung, also insbesondere zur Vermeidung eines Verrutschens oder Auseinanderreißens der Bedruckung entsprechend wenig Energie auf die Außenseite des Foliensubstrats zugeführt, weisen die so ausgebildeten Längsschweißnähte zwar eine unversehrte Bedruckung auf, bergen allerdings das Risiko der Ausbildung einer Soll-Bruchkante mit Kerbwirkung. Denn eine zu schwach ausgeprägte Verbindung der äußeren Schicht des Foliensubstrats mit sich selbst, also mit der zweiten Längsrandseite im Bereich einer Stoßnaht, führt bei einem Knicken zum Bruch der Nahtoberfläche, also der Schweißnaht im Bereich der Außenseite des Foliensubstrats, wobei der Riss dann bei weiterem Knicken in das Innere der Schweißnaht propagiert und die Stabilität des so beschädigten Tubenkörpers wesentlich reduziert wird, und im Wesentlichen nur noch durch etwa innenseitig angeordnete Verstärkungsstreifen gewährleistet wird, sodass ein Aufplatzen des Tubenkörpers, insbesondere der Verpackungstube bei einem Fall oder einer sonstigen Krafteinwirkung wahrscheinlicher wird. Außerdem sind solche Risse oder Bruchkanten auf der Oberfläche des Tubenkörpers, also im Bereich der Außenseite des Foliensubstrats optisch nicht ansprechend.

Aus dem Stand der Technik ist beispielsweise die JP 3484542 B2 bekannt, die zwar einerseits auf die Herstellung entsprechender Tubenkörper aus Foliensubstraten gerichtet ist, deren Innenseite oder innere Schicht eine verminderte Fließfähigkeit besitzt, andererseits hebt die Druckschrift jedoch auch hervor, dass sich das beschriebene Verfahren auch für sonstige, konventionelle Foliensubstrate eignet, um eine Nahtdickenreduktion zur Verbesserung der Endsiegeleigenschaften des Tubenkörpers zu erzielen. Bei einer gemäß der JP 3484542 B2 hergestellten Verpackungstube oder eines entsprechenden Tubenkörpers, also unter Verwendung eines Foliensubstrats, dessen Innenseite und Außenseite oder innere Schicht und äußere Schicht aus gut fließendem Polyethylen bestehen und bei dem zusätzlich ein Verstärkungsstreifen zum Einsatz kommt, der gemäß der Offenbarung der Druckschrift an seinen Oberflächen die gleichen Materialien wie auf der Innenseite oder auf der inneren Schicht des Foliensubstrats aufweist, werden bei der Ausbildung einer Stoß-Längsschweißnaht unter innenseitiger Anordnung des Verstärkungsstreifens aufgrund der beim Schweißvorgang üblichen Drücke und Temperaturen und des unvermeidlich einsetzenden Fließens aller erhitzten Komponenten insgesamt Schweißnähte ausgebildet, bei denen der Verstärkungsstreifen zumindest teilweise in das Foliensubstrat eingedrückt oder eingesunken ist.

Damit nimmt die JP 3484542 B2 bereits die maßgebliche Lehre der jüngeren EP 2 004 389 B1 vorweg, deren vermeintlicher Beitrag zum bestehenden Stand der Technik eben gerade darin bestehen soll, dass der Verstärkungsstreifen in das Foliensubstrat zumindest teilweise einsinkt. Auch die deutlich älteren Druckschriften JP S4953966 A und JP S60101028 A offenbaren bereits entsprechende Verstärkungsstreifen, welche zumindest teilweise beim Verbinden in das Foliensubstrat einsinken.

Aus der JP H08324600 A ist weiter ein Verfahren bekannt, bei dem die Längsrandseiten des Foliensubstrats mit einer treppenförmigen, insbesondere komplementären treppenförmigen Struktur versehen werden. Eine derartige Präparation der Längsrandseiten des Foliensubstrats vor der Ausbildung der Längsschweißnaht ist jedoch nachteilig und erfordert ein besonders großes Maß an Präzision.

Die EP 2 089 213 A1 schlägt ein Verfahren zur Herstellung von flexiblen Tubenkörpern für Verpackungstuben vor, bei dem ein frisch extrudierter, sich im plastischen Zustand befindlicher Faden, der also eine Temperatur oberhalb der Schmelztemperatur aufweist, dazu verwendet wird die Längsrandseiten direkt oder indirekt in einer planaren Anordnung oder einer Anordnung auf Stoß miteinander zu verschweißen. Problematisch hierbei ist, dass bei einer entsprechenden Anordnung der Längsrandseiten auf Stoß kein plastisches Material oder Material des Fadens zwischen die Längsrandseiten des Foliensubstrats gelangt und somit die Längsrandseiten des Laminats selbst nicht unmittelbar miteinander verbunden, insbesondere verschweißt werden. Soweit die Anordnung der Längsrandseiten des Foliensubstrats so mit einem Abstand gewählt wird, das Material des Fadens im plastischen Zustand zwischen die Längsrandseiten eindringen und zumindest ein mittelbare Verbindung der Längsrandseiten herstellen kann, wird jedoch in nachteilhafter Weise ein kleiner und entsprechend unbedruckter Abstand zwischen den Längsrandseiten generiert, der ebenfalls optisch unansprechend ist. Darüber hinaus ist das Verfahren unter Verwendung des frisch extrudierten, plastischen Fadens schwer zu beherrschen.

Aus der EP 2 004 389 B1 ist, wie oben bereits skizziert ein Verfahren bekannt, das zumindest teilweise ein Einbetten eines Verstärkungsstreifens in einen Tubenkörper für Verpackungstuben im Bereich einer Stoß-Längsschweißnaht vorsieht. Dabei ist vorgesehen, dass der Tubenkörper oder die Verpackungstube im Verbindungsbereich oder im Bereich der Längsschweißnaht in der Situation vor dem Ausbilden der Längsschweißnaht eine Verjüngung oder Dickenreduktion des Foliensubstrats aufweist, sodass das zusätzlich eingebrachte oder eingebettete Material des Verstärkungsstreifens die entsprechende Verjüngung kompensiert oder überkompensiert.

Weitere Ansätze zur Lösung der vorgenannten Probleme, die jedoch allesamt nicht zufriedenstellend ausfallen, sind aus den folgenden Druckschriften bekannt: EP 2 004 506 B1, EP 2 007 567 B1, WO 2011/012930 A1, EP 2 630 052 B1, EP 2 861 505 B1, JP H08 324599 A und JP H08 104340 A.

Weiterhin offenbart die EP 1 884 348 A1 ein Verfahren mit den Merkmalen des Oberbegriffs von Anspruch 1. Ferner sind zum Stand der Technik noch die WO 2005/095105 A1 und die US 5569144 A zu nennen, die ein sogenanntes "end-to-end"-Schweißverfahren offenbaren.

Schließlich sind auch noch die US 4733800 A, die zur Verstärkung einer Schweißnaht einen mehrschichtigen Streifen mit einem Metallgehalt offenbart, und die US 4685591 A, die ein mehrschichtiges Foliensubstrat offenbart, bekannt.

Ausgehend von dem vorangehend dargestellten Stand der Technik und den dort auftretenden Problemen liegt die Aufgabe der vorliegenden Erfindung darin ein Verfahren zur Herstellung von flexiblen Tubenkörpern für Verpackungstuben, entsprechende Tubenkörper für Verpackungstuben und eine Vorrichtung zur Herstellung von Tubenkörpern für Verpackungstuben anzugeben, welche ermöglichen, Tuben mit höchster Bedruckungsqualität aus bedruckten Foliensubstraten herzustellen, bei denen die Längsschweißnaht des zu einer Rohrform umgeformten Foliensubstrats im Bereich der Längsrandseiten einerseits optisch möglichst überhaupt nicht erkennbar ist und andererseits eine besonders hohe mechanische Stabilität aufweist.

Gelöst wird diese Aufgabe bezüglich des Verfahrens durch die Merkmale des Patentanspruchs 1. Bezüglich des Tubenkörpers wird diese Aufgabe durch einen Tubenkörper gemäß der Merkmale des Patentanspruchs gelöst. Bezüglich der Vorrichtung zur Herstellung von flexiblen Tubenkörpern wird die Aufgabe durch eine Vorrichtung gemäß der Merkmale des Anspruchs 18 gelöst.

Bei dem Verfahren zum Herstellen von flexiblen Tubenkörpern für Verpackungstuben aus einem, bevorzugt auf einer Außenseite eine Bedruckung aufweisenden, Foliensubstrat, welches mindestens eine verschweißbare Kunststoffschicht aufweist oder aus dieser besteht und welches eine eine sich in eine Längsrichtung erstreckende erste Längsrandseite und eine hierzu parallele und beabstandete zweite Längsrandseite umfasst und welches mit Umformmitteln zu einer Rohrform geformt und die beiden Längsrandseiten unter Ausbildung einer Längsschweißnaht, insbesondere miteinander verschweißt werden, wobei im Bereich der Stoßstelle und/oder der Längsschweißnaht im Inneren des zur Rohrform umgeformten Foliensubstrats ein Streifen angeordnet ist und zumindest bereichsweise oder abschnittsweise mit den Längsrandseiten verbunden, insbesondere verschweißt wird, ist erfindungsgemäß vorgesehen, dass zumindest eine Längsrandseite vor dem Ausbilden der Längsschweißnaht so umgeformt, insbesondere zugeschnitten wird, dass die Längsrandseiten bei dem zur Rohrform umgeformten Foliensubstrat radial nur im Bereich der Außenseite mit zumindest einer durch die Umformung gebildeten Spitze, insbesondere auf Stoß, aneinander anliegen.

Dadurch werden verschiedene Vorteile realisiert. Einerseits kann besonders vorteilhaft auf der Außenseite des Foliensubstrats eine verhältnismäßig geringe Energiebeaufschlagung, insbesondere Temperaturbeaufschlagung ausreichen, um eine Verbindung des Foliensubstrats im Bereich der Außenseite bzw. im Bereich einer äußeren Lage oder Schicht mit sich selbst auf einer gegenüberliegenden Längsrandseite zu ermöglichen. Dadurch wird jedoch sichergestellt, dass die Bedruckung auf der Außenseite des Foliensubstrats unbeschädigt bleibt und eine mögliche Rissbildung in der Bedruckung verhindert wird. Es wird also im Bereich der Außenseite oder im Bereich einer äußeren Schicht oder Lage des Foliensubstrats eine durch eine geringe Wärmeeintragung realisierte direkte Verschweißung oder Stumpf-Verschweißung der Außenseite oder der entsprechend äußeren Schicht mit sich selbst bis in eine gewisse Tiefe erzielt, die jedoch nur einen Bruchteil der Gesamtstärke oder Dicke des Foliensubstrats ausmacht.

Gleichzeitig erlaubt das erfindungsgemäße Verfahren, dass das Material des Streifens, im Inneren des zur Rohrform umgeformten Foliensubstrats in einen Zwischenraum zwischen den Längsrandseiten oder einen Durchbruch im Foliensubstrat eindringt und dort eine entsprechend gute und stabile Verbindung der Längsrandseiten herstellt, ohne dass dabei die Außenseite des zur Rohrform umgeformten Foliensubstrats beeinträchtigt wird oder das Material des Streifens bis an die Außenseite vordringt. Dies bedeutet, dass das Material des Streifens nicht über die gesamte Stärke oder Dicke des Foliensubstrats eindringt, sondern der Durchbruch im Foliensubstrat im Bereich der Längsrandseiten nur insoweit mit dem Streifenmaterial gefüllt wird, dass die Außenseiten der Längsrandseiten des Foliensubstrats immer noch auf Stoß aneinander anliegen. Insbesondere wird kein sichtbarer, unbedruckter Spalt im Bereich der Längsschweißnaht erzeugt. Außerdem kann der Streifen, insbesondere der Verstärkungsstreifen sowohl auf der der Außenseite gegenüberliegenden Innenseite des Foliensubstrats eine Verbindung mit dem Foliensubstrat eingehen oder ausbilden und gleichzeitig eine zumindest mittelbare Verbindung der Längsrandseiten oder der Kanten der Längsrandseiten herstellen, indem das Material des Streifens in den Bereich zwischen den Längsrandseiten eindringt, welche abgesehen von der Außenseite oder der äußeren Schicht oder Lage noch nicht durch eine Stoß-Längsschweißnaht miteinander verbunden sind.

Es hat sich überraschenderweise gezeigt, dass die Streifenoberfläche oder Streifenaußenseite, welche beim erwähnten Eindringen in Kontakt mit sowohl den Längsrandseiten als auch hauptsächlich mit der innen liegenden Lage des zur Rohrform umgeformten Foliensubstrats tritt, keineswegs mit allen Lagen des Foliensubstrats oder Tubenlaminats verschweißbar zu sein braucht, um dennoch eine mechanisch stabile Tube zu erhalten. Der Wegfall von mechanischer Stabilität durch unverschweißbare Grenzflächen innerhalb der Naht kann durch geeignete Wahl des Streifenmaterials und seiner Geometrie kompensiert und sogar überkompensiert werden. Wie aus dem Stand der Technik bekannt, müssen selbverständlich beide Oberflächen des Streifens mit der Innenseite des Tubenlaminats oder Foliensubstrats verschweißbar bzw. materialkompatibel sein, und bevorzugt aus demselben Material bestehen, aus dem der innerste Layer des Tubenlaminats besteht. Vorzugsweise weist das Tubenlaminat oder das Foliensubstrat eine oder mehrere mit der Streifenoberfläche verschweißbare innere Lagen auf. Die äußerste Lage oder Außenseite des Foliensubstrats oder Laminats braucht nicht mit der Streifenoberfläche verschweißbar zu sein, weil sie mit sich selbst verschweißt wird. Somit kann zum Beispiel eine besonders gut bedruckbare BOPET-Folie die äußerste Lage des Tubenlaminates bilden.

Gemäß einer ersten besonders bevorzugten Ausgestaltung des Verfahrens kann vorgesehen sein, dass mit äußeren Heizmitteln ein Verbinden, insbesondere Verschweißen, der Außenseite des Foliensubstrats im Bereich der zumindest einen Spitze einer Längsrandseite im Rahmen der Ausbildung der Längsschweißnaht erfolgt, nachdem die von der Außenseite abgewandte Innenseite mit dem Streifen verbunden, insbesondere verschweißt wird. Die Längsrandseiten werden also im Bereich der Innenseite in einem kalt oder nicht erwärmten Zustand mit einem bevorzugt erhitzten, plastifizierten Streifen unter Druckeinwirkung in Kontakt gebracht. Dabei wird die Außenseite des zur Rohrform umgeformten Foliensubstrats im Bereich der Längsrandseiten so beibehalten, dass das aneinander anliegen, insbesondere auf Stoß, erhalten bleibt. Dies bedeutet, dass während der Verbindung des Streifens mit dem Foliensubstrat im Bereich der Längsrandseiten der Durchbruch im Foliensubstrat der sich von der Innenseite bis zur Außenseite des Foliensubstrats in der Rohrform erstreckt beibehalten wird und durch das Material des Streifens höchstens teilweise aufgefüllt wird, nicht zuletzt auch um die aneinander anliegende Anordnung der Längsrandseiten im Bereich der Außenseite nicht auseinander zu drücken. Bevorzugt erfolgt anschließend an die Verbindung, insbesondere Verschweißung des Streifens mit dem Foliensubstrat eine Verbindung, insbesondere Verschweißung des Foliensubstrats mit sich selbst im Bereich der Außenseite des Foliensubstrats. Dies bedeutet, dass nach der Verbindung des Streifens mit dem Foliensubstrat noch finalisierend das Foliensubstrat im Bereich Längsrandseiten auf der Außenseite mit sich selbst verschweißt wird.

Dadurch werden in besonders vorteilhafter Weise die oben bereits erwähnten Vorteile realisiert, da nach einer Verbindung des Foliensubstrats mit dem Streifen, bei der jedoch die Anordnung der Längsrandseiten im Bereich der Außenseite beibehalten wird und insbesondere eine Spaltbildung verhindert wird, auf der Außenseite eine schonende, insbesondere die Bedruckung nicht beschädigende oder beeinträchtigende Stoß-Verbindung oder Stoß-Schweißnaht zumindest einer als spitz umgeformten Längsrandseite mit einer angrenzenden Längsrandseite ausgeführt oder ausgebildet wird, die zu einer scheinbar nahtlosen Ausbildung des Tubenkörpers auf der Außenseite führt, wobei bereits zuvor die Verbindung des Streifens, zumindest mit der Innenseite des Foliensubstrats oder der Längsrandseiten des Foliensubstrats, bevorzugt auch ein nicht miteinander verbundener Bereich der Längsrandseiten ausgebildet wurde, der einerseits die Bedruckung der Außenseite des Foliensubstrats und die scheinbar nahtlose Verbindung auf der Außenseite des Foliensubstrats nicht beeinträchtigt oder gefährdet, andererseits jedoch eine besonders hohe Stabilität und einen besonders effektiven Schutz vor einer Ausbildung einer Soll-Bruchstelle bietet.

Besonders bevorzugt kann vorgesehen sein, dass im Rahmen des Verfahrens beim Umformen der zumindest einen Längsrandseite des Foliensubstrats jeweils eine zu einer Dickenrichtung des Foliensubstrats schräg verlaufende Kante, insbesondere Schnittkante, erzeugt wird, wobei die Schräge derart orientiert ist, dass beim Umformen des Foliensubstrats zur Rohrform ein von der Außenseite nach innen breiter werdender Durchbruch im Foliensubstrat erzeugt wird, insbesondere dann wenn die Längsrandseiten im Bereich der Außenseite aneinander anliegend, insbesondere auf Stoß miteinander, angeordnet werden. Dabei wird der Durchbruch im Bereich der Außenseite durch die aneinander anliegenden aber nicht miteinander verbundenen Bereiche der Längsrandseiten begrenzt. Es handelt sich also um einen Durchbruch der sich über die gesamte Dicke des Foliensubstrats erstreckt und nicht um eine Ausnehmung oder Vertiefung, selbst wenn die Breite des Durchbruchs gerade im Bereich der Außenseite des Foliensubstrats durch die aneinander anliegenden Abschnitte der Längsrandseiten minimal ist.

Dabei kann bevorzugt berücksichtigt werden, dass beim Umformen des Foliensubstrats zu einem entsprechenden Rohr oder in eine entsprechende Rohrform selbst bereits Spannungen, beispielsweise Schubspannungen induziert werden, die an sich einer entsprechenden Ausbildung eines von der Außenseite nach innen breiter werdenden Durchbruchs entgegenwirken. Dies bedeutet aber im Umkehrschluss auch, dass die entsprechende Schräge der Kante, insbesondere Schnittkante bezüglich der Dickenrichtung des Foliensubstrats entsprechend deutlich ausgebildet werden kann, da diese durch die Umformung des Foliensubstrats zur Rohrform gewissermaßen verringert oder kompensiert wird, sodass selbst bei einer deutlichen Ausbildung der Schräge bei der entsprechenden Umformung des Foliensubstrats zur Rohrform nur ein verhältnismäßig gering ausgeprägter, nach innen breiter werdender Durchbruch im radialen Profil des zur Rohrform umgeformten Foliensubstrats ausgebildet wird.

Gemäß einer besonders bevorzugten Ausgestaltung des erfindungsgemäßen Verfahrens kann vorgesehen sein, dass die Umformung der Längsrandseiten derart erfolgt, dass der von der Außenseite nach innen breiter werdende Durchbruch einen Winkel von 5° bis 50°, bevorzugt von 10° bis 40° einschließt. Dieser wird im Zustand des zur Rohrform umgeformten Foliensubstrats bestimmt. Dadurch wird in bevorzugter Weise realisiert, dass das Material des Streifens, insbesondere des Verstärkungsstreifens, in einen radial innen liegenden Teil des Durchbruchs, bevorzugt davon ausgenommen, der Bereich der äußeren Schicht des Foliensubstrats, eindringen kann und dort neben einer Verbindung mit der Innenseite des Foliensubstrats im Bereich der Längsrandseiten eine zumindest mittelbare Verbindung der Längsrandseiten realisiert, ohne die Außenseite und die dortige Bedruckung zu beeinträchtigen.

Gemäß einer weiteren, besonders bevorzugten Ausgestaltung des Verfahrens kann zudem vorgesehen sein, dass die beiden Längsrandseiten des Foliensubstrats umgeformt, insbesondere zugeschnitten, werden, sodass bei dem zur Rohrform umgeformten Foliensubstrat radial im Bereich der Außenseite zwei durch die Umformung, insbesondere den Zuschnitt, gebildete Spitzen, insbesondere auf Stoß, aneinander anliegen. Dadurch wird in besonders vorteilhafter Weise der Energiebedarf zur Ausbildung der Stumpf-Schweißnaht im Bereich der Außenseite des Foliensubstrats verringert und damit die Gefahr zur Beeinträchtigung des Drucks oder der Bedruckung auf der Außenseite des Foliensubstrats verringert. Außerdem kann durch die beidseitige Umformung oder den beidseitigen Zuschnitt der Längsrandseiten eine besonders vorteilhafte Ausgestaltung, beispielsweise eine symmetrische Ausgestaltung des Durchbruchs zwischen den Längsrandseiten unterhalb der Verbindung im Bereich der Außenseite der Längsrandseiten realisiert werden.

In einer weiteren besonders bevorzugten Ausgestaltung des Verfahrens kann zudem vorgesehen sein, dass zumindest eine Längsrandseite im Rahmen eines Besäumungsschrittes mit einem Besäumungswerkzeug, insbesondere mit einem Besäumungsmesser, in Längsrichtung unter einer Erzeugung eines vom Foliensubstrats abgetrennten Trimmstreifens zugeschnitten wird, wobei der Trimmstreifen als Streifen innerhalb des zur Rohrform umgeformten Foliensubstrats im Bereich der Stoßstelle der Längsrandseiten und/oder im Bereich der Längsschweißnaht angeordnet und mit dem Foliensubstrat, insbesondere mit den Längsrandseiten, verschweißt wird. Dieses Vorgehen wird bevorzugt ermöglicht, wenn die Verschweißbarkeit der Innen- und Außenseite des Foliensubstrats gegeben ist, wie sie allerdings für alle Foliensubstrate oder Laminate, die sich für Überlapp-Schweißen eignen, gegeben ist.

Die Verwendung eines zunächst vom für das Überlapp-Schweißen geeigneten Foliensubstrat abgetrennten Trimmstreifens als Streifen oder Verstärkungsstreifen hat mehrere vorteilhafte Wirkungen. Einerseits wird dadurch eine Materialkompatibilität und damit auch Verschweißbarkeit des Foliensubstrats einerseits und des Streifens andererseits sichergestellt. Denn das Foliensubstrat und der Trimmstreifen, der als Streifen oder Verstärkungsstreifen in das Innere der Rohrform eingebracht und dort mit dem Foliensubstrat verbunden, insbesondere verschweißt wird, weist die identische Materialzusammensetzung und Materialabfolge, insbesondere Schichtabfolge, auf, wie das Foliensubstrat selbst. Dementsprechend kann, beispielsweise durch ein Verdrehen des Streifens oder Trimmstreifens gegenüber dem Foliensubstrat um 180° in Längsrichtung sichergestellt werden, dass die aneinander anliegenden Materialien oder Schichten im Bereich der Innenseite des zur Rohrform umgeformten Foliensubstrats identisch sind oder aus identischem Material gebildet werden. Alternativ kann der Streifen auch ohne Verdrehen verwendet werden, was identische, also höchstmögliche Materialkompatibilität an der Innenseite und somit einen optimalen Schließprozess nach dem Befüllen, also beim Erstellen der Endnaht sicherstellt.

Zudem kann ein in dem Foliensubstrat angeordneter Barriere-Layer, der entsprechend auch in dem Trimmstreifen, der als Streifen zur Verbindung mit dem zur Rohrform umgeformten Foliensubstrat verwendet wird, sowohl eine mechanische Stabilisierung der Schweißnaht, insbesondere der Längsschweißnaht bewirken, als auch die Barrierewirkung der Naht, in welcher die Barriere eine - wenn auch sehr begrenzte - Lücke aufweist, verbessern. Dabei ist besonders vorteilhaft, wenn durch die einwirkenden Drücke im Rahmen der Verbindung des Streifens mit den zumindest im Außenbereich oder auf der Außenseite bereits miteinander verbundenen Längsrandseiten so ausgebildet und ausgeführt werden, dass der besagte Barriere-Layer oder die besagte Barriere-Schicht abgedeckt oder abgeschirmt wird und also nicht vom Inneren des Tubenkörpers zugänglich oder erreichbar ist. Dies kann beispielsweise dadurch erreicht werden, dass im Rahmen der Erwärmung des Streifens und der Verbindung mit dem Foliensubstrat ein Fließen, insbesondere ein Fließen um den Barriere-Layer herum verursacht wird, das sicherstellt, dass der Barriere-Layer oder die Barriere-Schicht seitlich vom Material des Streifens, insbesondere von Schichten des Streifens umschlossen oder abgedeckt wird.

Soweit der Trimmstreifen als Streifen zum zumindest bereichsweisen oder abschnittsweisen Verbinden, insbesondere Verschweißen mit den Längsrandseiten verwendet wird, ist es zudem besonders vorteilhaft, wenn der entsprechende Trimmstreifen keine Bedruckung aufweist. Denn dadurch wird sichergestellt, dass keine Bedruckung im Inneren des Tubenkörpers der Verpackungstube angeordnet wird und damit mit der Tubenfüllung potentiell in Kontakt kommen kann, oder die Stabilität der Naht und/oder des Endigels beeinträchtigt wird. Dementsprechend kann beispielsweise vorgesehen sein, dass neben dem Abtrennen des Trimmstreifens auch ein weiterer Zuschnitt des Trimmstreifens erfolgt, beispielsweise um bedruckte Bereiche oder Randbereiche abzutrennen.

Gemäß einer weiteren besonders bevorzugten Ausgestaltung des Verfahrens kann dazu vorgesehen sein, dass der Trimmstreifen bei oder nach seiner Abtrennung vom Foliensubstrat, insbesondere vor dem Zuführen in das Innere des zur Rohrform umgeformten Foliensubstrats, seinerseits zumindest einseitig mit Besäumungswerkzeugen, insbesondere mit Besäumungsmessern, in Längsrichtung zugeschnitten wird.

Gemäß einer weiteren vorteilhaften Ausgestaltungsform des Verfahrens kann vorgesehen sein, dass der Trimmstreifen zwischen seiner Abtrennung vom Foliensubstrat und seiner Einführung in das Innere des zum Rohrkörper umgeformten Foliensubstrats auf einer Speichereinrichtung zwischengespeichert wird. Dies kann insbesondere dann vorteilhaft vorgesehen sein, wenn sich der Trimmstreifen bei seiner Verwendung als Streifen oder Verstärkungsstreifen für den Tubenkörper, insbesondere im Rahmen einer Erwärmung auch in seiner Längsrichtung streckt oder verlängert, sodass insgesamt der Durchsatz oder der Bedarf des Trimmstreifens geringer ausfällt als der Bedarf an Länge des Foliensubstrats.

In einer ebenfalls besonders bevorzugten Ausgestaltung des Verfahrens kann zudem vorgesehen sein, dass der Streifen, insbesondere der Trimmstreifen, mit inneren Heizmitteln erwärmt wird und in einem erwärmten und dadurch erweichten, plastischen Zustand in das Innere des zum Rohrkörper umgeformten Foliensubstrats eingebracht und mit dem Foliensubstrat, insbesondere auf dessen Innenseite und in Teilen des Durchbruchs im Bereich der Längsrandseiten, verbunden wird. Das Vorerwärmen des Streifens oder Trimmstreifens hat dabei verschiedene Vorteile. Einerseits wird dadurch ermöglicht, dass eine erleichterte oder verbesserte Positionierung des Trimmstreifens oder Streifens ermöglicht wird, da in einem erwärmten und entsprechend erweichten, plastischen Zustand eine geringe aber dennoch gewisse Anhaftung auf einem Zuführmittel erreicht werden kann, sodass der Streifen oder Trimmstreifen weniger leicht seitlich verrutscht oder verschoben wird. Außerdem kann in dem erwärmten Zustand eine besonders schnelle und besonders effektive Verbindung mit der Innenseite des zur Rohrform umgeformten Foliensubstrats im Bereich der Längsrandseiten erreicht werden. Dies dient in vorteilhafter Weise bereits bei einem ersten Kontakt zwischen Foliensubstrat und Streifen auch zur erstmaligen oder vorläufigen Fixierung der Position der Längsrandseiten zueinander, sodass dadurch auch die Position der Längsrandseiten im Bereich der Außenseite fixiert wird und das aneinander anliegen sicherstellt. Zudem ermöglicht ein erwärmter und erweichter Streifen oder Trimmstreifen in besonders vorteilhafter Weise ein schnelles Eindringen des Materials des Streifens in einen Durchbruch unter teilweisem Auffüllen des besagten Durchbruchs zwischen den Längsrandseiten radial innerhalb einer später erzeugten darüber angeordneten Verbindung der Außenseite der Längsrandseiten miteinander.

Weiter kann besonders vorteilhaft vorgesehen sein, dass der Streifen, insbesondere der Trimmstreifen, bei der Verbindung mit dem Foliensubstrat auf der Innenseite, eine Verbreiterung quer zur Längsrichtung erfährt, so dass das Verhältnis einer Breite des Steifens/Trimmstreifens nach der Verbindung mit dem Foliensubstrat zu einer ursprünglichen Breite des Steifens/Trimmstreifens größer ist als 1,5, wobei bevorzugt der Streifen oder Trimmstreifen auch, insbesondere gleichzeitig, eine Verflachung quer zur Längsrichtung (L) erfährt, so dass das Verhältnis einer Höhe des Steifens/Trimmstreifens nach der Verbindung mit dem Foliensubstrat zu der ursprünglichen Höhe des Steifens/Trimmstreifens kleiner ist als 2/3. Damit wird in vorteilhafte Weise erreicht, dass die Längsnaht oder Längsschweißnaht eine geringe Höhe aufweist und darüber hinaus auch eine ausreichende Breite aufweist.

Ebenfalls kann das Verfahren besonders bevorzugt vorsehen, dass der Streifen, insbesondere der Trimmstreifen mit Zuführmitteln auf einem endlos umlaufenden Kontaktband abgelegt und, insbesondere auf dem Kontaktband in das Innere des zum Rohrkörper umgeformten Foliensubstrats eingeführt wird. Dadurch kann in besonders vorteilhafter Weise eine fortlaufende Zuführung des Streifens oder Trimmstreifens und eine Verbindung des Streifens oder Trimmstreifens mit dem Foliensubstrat gewährleistet werden.

Bezogen auf den flexiblen Tubenkörper für Verpackungen, insbesondere hergestellt nach dem vorangehend beschriebenen Verfahren, aus einem bevorzugt auf einer Außenseite eine Bedruckung aufweisenden, Foliensubstrat, welches mindestens eine verschweißbare Kunststoffschicht aufweist oder aus dieser besteht und welches eine eine sich in Längsrichtung erstreckende erste Längsrandseite und eine hierzu parallele und beabstandete zweite Längsrandseite umfasst, wobei das Foliensubstrat mit Umformmitteln zu einer Rohrform geformt und die beiden Längsrandseiten mit einer Längsschweißnaht, insbesondere miteinander verschweißt sind, und wobei im Bereich der Stoßstelle und/oder der Längsschweißnaht im Inneren des zur Rohrform umgeformten Foliensubstrats ein Streifen angeordnet und zumindest bereichsweise oder abschnittsweise mit den Längsrandseiten verbunden, insbesondere verschweißt ist, wird die oben genannte Aufgabe erfindungsgemäß dadurch gelöst, dass mindestens eine Längsrandseite so umgeformt, insbesondere so zugeschnitten ist, dass die Längsrandseiten bei dem zur Rohrform umgeformten Foliensubstrat radial nur im Bereich der Außenseite mit zumindest einer durch die Umformung, insbesondere den Zuschnitt, gebildeten Spitze unmittelbar miteinander verbunden sind. Dabei wird die Verbindung erfindungsgemäß auf Stoß im Bereich der Außenseite des Foliensubstrats ausgebildet.

Dadurch werden für den Tubenkörper weitestgehend identische Vorteile erreicht, wie im Zusammenhang mit dem vorangehend beschriebenen Verfahren bereits offenbart. Im Detail wird durch die im Bereich der Außenseite oder im Bereich einer äußeren Schicht des Foliensubstrats hergestellten unmittelbaren Stoß-Schweißnaht eine optisch nahtlos erscheinende Verbindung oder Verschweißung ermöglicht, die keine erkennbare Unterbrechung in der auf der Außenseite aufgebrachten Bedruckung erkennen lässt und gleichzeitig eine insgesamt mechanisch stabil ist.

Gemäß einer ersten besonders bevorzugten Ausgestaltung des Tubenkörpers kann vorgesehen sein, dass die zumindest eine umgeformte Längsrandseite des Foliensubstrats jeweils eine zu einer Dickenrichtung des Foliensubstrats schräg verlaufende Kante, insbesondere Schnittkante aufweist, wobei die Schräge derart orientiert ist, dass beim Umformen des Foliensubstrats zur Rohrform und/oder beim unmittelbaren Verbinden der Längsrandseiten ein von der Außenseite nach innen breiter werdender Durchbruch erzeugt wird.

Durch den Durchbruch werden die oben bereits beschriebenen Vorteile und vorteilhaften Wirkungen erreicht.

In einer vorteilhaften Ausgestaltung des Tubenkörpers kann zudem vorgesehen sein, dass die Umformung der Längsrandseiten und die unmittelbare Verbindung der Längsrandseiten im Bereich der Außenseite derart erfolgt, dass der Durchbruch im Zustand des zur Rohrform umgeformten Foliensubstrats einen Winkel von 5° bis 50°, bevorzugt von 10° bis 40° einschließt. Auch hierdurch werden die oben bereits beschriebenen Vorteile sowie vorteilhaften Wirkungen erzielt.

Ebenfalls kann vorteilhaft vorgesehen sein, dass der Durchbruch zumindest teilweise, insbesondere mit Ausnahme des Bereichs der aneinander anliegenden Außenseiten der Längsrandseiten, bevorzugt mit Ausnahme der Außenseite und/oder der äußeren Schicht, mit Material des Streifens oder des Trimmstreifens ausgefüllt ist.

Zudem kann der Tubenkörper besonders bevorzugt derart ausgestaltet sein, dass die beiden Längsrandseiten des Foliensubstrats so umgeformt sind, dass bei dem zur Rohrform umgeformten Foliensubstrat radial im Bereich der Außenseite zwei durch die Umformung gebildete Spitzen, insbesondere auf Stoß, unmittelbar miteinander verbunden sind. Hierdurch kann eine Verbindung im Bereich der Außenseite des Foliensubstrats erzeugt werden, die nur ein Mindestmaß an Wärmeenergie benötigt und damit die Bedruckung der Außenseite unbeeinträchtigt, insbesondere unbeschädigt, lässt und dabei gleichzeitig eine scheinbar nahtlose Tube oder ein scheinbar nahtloser Tubenkörper gebildet wird.

Eine weitere besonders bevorzugte Ausgestaltung des Tubenkörpers kann zudem vorsehen, dass der Streifen durch einen Trimmstreifen des Foliensubstrats gebildet ist, der im Rahmen eines Besäumungsprozesses zuvor von dem Foliensubstrat abgetrennt wird. Dies setzt entsprechende Materialkompatibilitäten voraus, wie oben bereits erläutert. Dadurch wird die Kompatibilität zwischen Foliensubstrat und Streifen sichergestellt. Außerdem wird dadurch, insbesondere bei einer entsprechenden Rotation des Trimmstreifens um 180° die Verschweißbarkeit des Trimmstreifens mit der Innenseite der zur Rohrform umgeformten Foliensubstrats im Bereich der Längsrandseiten sichergestellt, da dann entsprechend identische Materialien oder identische Schichten aneinander zur Anlage kommen. Außerdem wird, bei Foliensubstraten mit einer Barriereschicht oder einem Barriere-Layer in besonders vorteilhafter Weise bei der Verwendung eines Trimmstreifens als Streifen die mechanische Stabilität der Längsschweißnaht durch die in den Trimmstreifen ebenfalls eingebettete Barriereschicht vorteilhaft beeinflusst, sofern die Barriereschicht auch im Tubenlaminat oder Foliensubstrat einen nennenswerten Beitrag zur Stabilität liefert.

Bezüglich einer Vorrichtung zur Herstellung von flexiblen Tubenkörpern für Verpackungstuben aus einem bevorzugt auf einer Außenseite eine Bedruckung aufweisenden, Foliensubstrat, welches mindestens eine verschweißbare Kunststoffschicht aufweist oder aus dieser besteht und welches eine eine sich in Längsrichtung erstreckende erste Längsrandseite und eine hierzu parallele und beabstandete zweite Längsrandseite umfasst, wobei das Foliensubstrat mit Umformmitteln zu einer Rohrform geformt und die beiden Längsrandseiten unter Ausbildung einer Längsschweißnaht, insbesondere miteinander verschweißt werden, und wobei ferner mit Zuführmitteln im Bereich der Stoßstelle und/oder der Längsschweißnaht im Inneren des zur Rohrform umgeformten Foliensubstrats ein Streifen angeordnet und mit Verbindungsmitteln zumindest bereichsweise oder abschnittsweise mit den Längsrandseiten verbunden, insbesondere verschweißt wird, wird die oben genannte Aufgabe erfindungsgemäß dadurch gelöst, dass Randumformmittel zum Umformen, insbesondere Zuschneiden, zumindest einer Längsrandseite vor dem Ausbilden der Längsschweißnaht vorgesehen sind, wobei die Umformmittel zur Erzeugung der Rohrform des Foliensubstrats so ausgebildet sind, dass die Längsrandseiten bei dem zur Rohrform umgeformten Foliensubstrat radial im Bereich der Außenseite mit zumindest einer durch die Randumformmittel gebildete Spitze, insbesondere auf Stoß, aneinander anliegen.

Der erfindungsgemäße Grundgedanke wird also bei der Vorrichtung zur Herstellung von flexiblen Tubenkörpern für Verpackungstuben dadurch realisiert, dass einerseits die Längsrandseiten oder zumindest eine Längsrandseite mit entsprechenden Randumformmitteln umgeformt, insbesondere zugeschnitten wird, wobei die Umformung oder der Zuschnitt gerade derart erfolgt, dass im Bereich der Außenseite oder im Bereich einer äußeren Schicht oder Lage an zumindest einer Längsrandseite eine Spitze gebildet oder ausgebildet wird und dass zudem die Umformmittel zur Umformung des Foliensubstrats zu einer Rohrform so ausgebildet und/oder angeordnet sind, dass zwar ein überlappungsfreie Anordnung oder eine Anordnung der Längsrandseiten auf Stoß gewährleistet oder ermöglicht wird, diese jedoch genau so hergestellt oder bereitgestellt wird, dass die entsprechenden Außenseiten oder die äußeren Schichten oder Lagen aneinander anliegen, mit der Besonderheit, dass zumindest auf einer Seite oder an einer Längsrandseite eine durch die Umformung, insbesondere den Zuschnitt der Längsrandseite gebildete Spitze an der gegenüberliegenden Längsrandseite im Bereich der Außenseite oder im Bereich der äußeren Schicht oder Lage zur Anlage kommt.

Auch dadurch wird es ermöglicht, dass mit einem sehr geringen Energieeintrag die zur Rohrform umgeformte Folie oder das zur Rohrform umgeformte Foliensubstrat im Bereich der Außenseite oder im Bereich der äußeren Lage an den Längsrandseiten unmittelbar miteinander verbunden, insbesondere unmittelbar miteinander verschweißt werden kann, ohne dass ein sichtbarer Spalt entsteht oder dass die Gefahr besteht, dass die Bedruckung der Außenseite des Foliensubstrats beschädigt oder sonst in Mitleidenschaft gezogen wird. Es wird also möglich eine umlaufend bedruckte Tube oder einen umlaufend bedruckten Tubenkörper herzustellen, der eine fast unsichtbare Längsnaht aufweist oder sogar nahtlos erscheint.

Gemäß einer ersten besonders bevorzugten Ausgestaltung der erfindungsgemäßen Vorrichtung kann vorgesehen sein, dass äußere Heizmittel vorgesehen sind, die zum Verbinden, insbesondere Verschweißen der Außenseite des Foliensubstrats im Bereich der zumindest einen Spitze der Längsrandseite im Rahmen der Ausbildung der Längsschweißnaht dienen, wobei die äußeren Heizmittel derart angeordnet sind, dass die Verbindung der Außenseite, insbesondere die unmittelbare Verbindung der entsprechenden äußeren Schichten miteinander, erfolgt, nachdem die von der Außenseite abgewandte Innenseite mit dem Streifen verbunden, insbesondere verschweißt wurde. Dadurch kann in besonders vorteilhafter Weise erreicht werden, dass eine unmittelbare oder direkte Verbindung der Außenseiten oder Materialien in den äußeren Schichten oder Lagen erreicht wird, die mit entsprechend wenig Energieeintrag hergestellt werden kann und die dabei die Bedruckung auf der Außenseite des Foliensubstrats unbeeinträchtigt lässt. Die äußeren Heizmittel müssen dementsprechend nicht besonders groß oder leistungsstark dimensioniert werden, da ein verhältnismäßig geringer Energieeintrag ausreicht, um ein Verschweißen der Außenseiten des zur Rohrform umgeformten Foliensubstarts zu bewerkstelligen.

Gemäß einer weiteren, bevorzugten Ausgestaltung der Vorrichtung kann zudem vorgesehen sein, dass die Randumformmittel derart angeordnet und ausgebildet sind, dass beim Umformen der zumindest einen Längsrandseite des Foliensubstrats jeweils eine zu einer Dickenrichtung des Foliensubstrat schräg verlaufende Kante, insbesondere Schnittkante erzeugt wird, wobei die Schräge derart orientiert ist, dass beim Umformen des Foliensubstrats zur Rohrform ein von der Außenseite nach innen breiter werdender Durchbruch erzeugt wird, insbesondere wenn die Außenseiten der Längsrandseiten auf Stoß zueinander oder überlappungsfrei aneinander angeordnet werden.

Ebenfalls kann die Vorrichtung, insbesondere unter der Voraussetzung, dass Laminate verarbeitet werden, deren Oberseite mit deren Unterseite verschweisst werden können, dadurch besonders vorteilhaft weitergebildet werden, dass ein Besäumungswerkzeug vorgesehen ist, welches, insbesondere mit einem Besäumungsmesser, zumindest im Rahmen eines Besäumungsschrittes einer Längsrandseite in Längsrichtung unter Erzeugung eines vom Foliensubstrat abgetrennten Trimmstreifens zuschneidet, wobei der Trimmstreifen als Streifen innerhalb des zur Rohrform umgeformten Foliensubstrats im Bereich der Stoßstelle der Längsrandseiten und/oder der Längsschweißnaht angeordnet und mit dem Foliensubstrat, insbesondere mit den Längsrandseiten, verschweißt wird. Dadurch werden verschiedene Vorteile erreicht. Einerseits wird ein besonders materialsparendes Herstellen der Tubenkörper ermöglicht, da kein zusätzlicher Streifen vorgesehen und in den Tubenkörper eingebracht werden muss, sondern dass insofern ein Abfallprodukt eines ggf. unentbehrlichen Besäumungsschrittes des Foliensubstrats wieder verwendet oder recycelt werden kann. Außerdem ergeben sich keine Kompatibilitätsprobleme oder Probleme bei der Herstellung von Schweißverbindungen zwischen dem Streifen und dem Foliensubstrat, da Foliensubstrat und Streifen die gleichen Materialien oder die gleichen Schichten aufweisen oder umfassen. Schließlich kann der in dem Foliensubstrat und damit in dem Trimmstreifen befindliche Barriere-Layer zur mechanischen Stabilisierung der Längsschweißnaht beitragen.

Eine ebenfalls bevorzugte Ausgestaltung der Vorrichtung kann zudem innere Heizmittel vorsehen, welche den Streifen, insbesondere den Trimmstreifen, erwärmen und plastisch erweichen, wobei die inneren Heizmittel derart angeordnet sind, dass der Streifen in einem erwärmten und dadurch erweichten Zustand mit Zuführmitteln in das Innere des in Rohrform umgeformten Foliensubstrats eingebracht wird und an den Längsrandseiten zur Anlage kommt und zwar bevor die Verbindung des Foliensubstrats im Bereich der Längsrandseiten auf der Außenseite mit sich selbst hergestellt wird. Durch die Erwärmung und Erweichung über die inneren Heizmittel wird einerseits sichergestellt, dass ein Verrutschen des Streifens oder Trimmstreifens verhindert oder einem Verrutschen zumindest vorgebeugt wird. Außerdem erfolgt im erwärmten und erweichten Zustand des Streifens oder Trimmstreifens bei einer entsprechenden Kontaktierung des Streifens mit dem Foliensubstrat im Bereich der Längsrandseite unmittelbar eine Verbindung zwischen der Innenseite des Foliensubstrats im Bereich der Längsrandseiten und dem Streifen oder Trimmstreifen, welche besonders vorteilhaft bereits die Relativposition der Längsrandseiten im Bereich der Außenseite fixiert, bevor die entsprechende Verbindung des Foliensubstrats auf der Außenseite mit sich selbst erzeugt wird. Zudem kann durch die vorab vorgenommene Erwärmung und Erweichung des Streifens oder Trimmstreifens besonders effektiv sichergestellt werden, dass das Material des Streifens oder Trimmstreifens teilweise in einen entsprechenden Durchbruch zwischen den Längsrandseiten, welcher sich über die vollständige Dicke des Foliensubstrats erstreckt, eindringen und dort zu einer entsprechend guten und sicheren, zumindest mittelbaren, Verbindung zwischen den Längsrandseiten führen kann, ohne dass jedoch die aneinander anliegenden, noch nicht unmittelbar miteinander verbundenen Längsrandseiten im Bereich der Außenseite verschoben werden, insbesondere auseinandergeschoben werden.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische Darstellung eines Foliensubstrats im Ausgangszustand sowie mit angedeuteten Trenn- oder Schnittebenen;
- Fig. 2:: eine schematische Darstellung eines Ausschnitts eines Tubenkörpers im Bereich der Längsschweißnaht in einem ersten Verfahrensstadium;
- Fig. 3:: eine schematische Darstellung eines Ausschnitts eines erfindungsgemäßen Tubenkörpers in einem zweiten Verfahrensstadium;
- Fig. 4:: eine schematische Darstellung einer erfindungsgemäßen Vorrichtung zur Herstellung von Tubenkörpern.

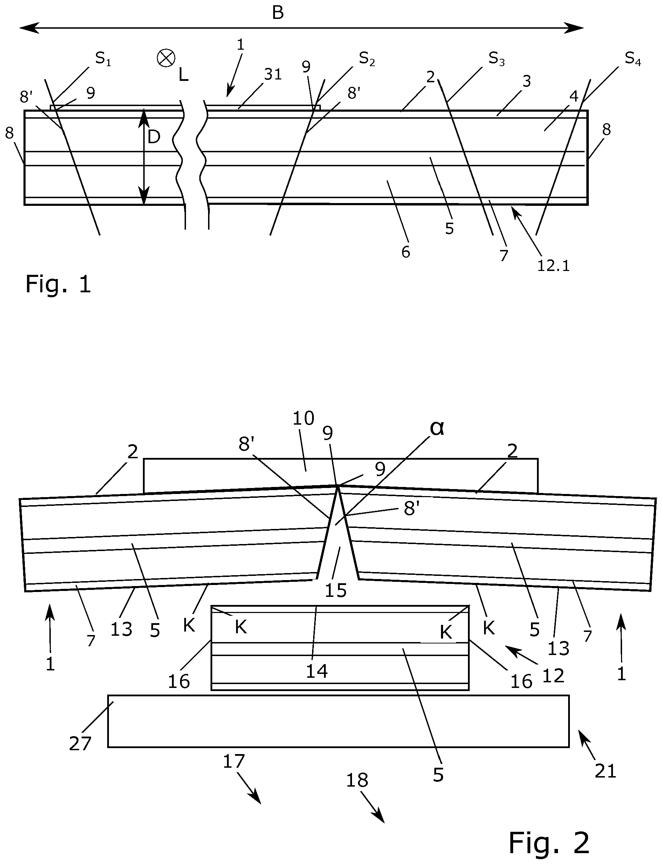

Fig. 1 zeigt einen Querschnitt durch ein Foliensubstrat, welches bei der vorliegenden Erfindung zum Einsatz kommen kann. Das Foliensubstrat 1 weist auf einer Außenseite 2 Bedruckung 31 auf. Die Bedruckung 31 ist häufig auf einer äußeren Schicht 3 des Foliensubstrats 1 angeordnet, kann aber alternativ auch unterhalb der Schicht 3 angeordnet sein. Unterhalb der äußeren Schicht 3 kann eine weitere Schichtanordnung 4 aus einer oder mehreren Schichten vorgesehen sein. An die Schichtanordnung 4 schließt sich auf der von der Außenseite 2 abgewandten Seite eine Barriereschicht 5 oder ein Barriere-Layer an. Die Barriereschicht 5 kann von einer weiteren Schichtanordnung 6 gefolgt sein, welcher eine innere Schicht 7 folgt.

Im Rahmen der Herstellung des flexiblen Tubenkörpers aus einem Foliensubstrat 1 kann beispielsweise vorgesehen sein, dass entlang der in die Zeichenebene der Fig. 1 verlaufenden Längsrichtung L des Foliensubstrats 1 Umformungen, insbesondere Zuschnitte, der Längsrandseiten 8 vorgenommen werden, die in der Fig. 1 durch entsprechende Schnittebenen S₁ und S₂ angedeutet werden. Durch die Schnittebenen S₁ und S₂ werden die ursprünglichen Längsrandseiten 8 in die neuen oder zugeschnitten Längsrandseiten 8' überführt. Dabei ist vorgesehen, dass zumindest eine der Schnittebenen S₁, S₂ schräg zur Dickenrichtung D des Foliensubstrats 1 verlaufen, und zwar so, dass sie im Bereich der Außenseite 2 entsprechende eine Spitze 9 oder Spitzen 9, also spitze Winkel, ausbilden. Wie nachfolgend noch detaillierter dargestellt werden wird, sorgen die durch die Schnittebenen S₁ und S₂ gebildeten Spitzen 9 im Bereich der Außenseite 2 des Foliensubstrats 1 bei einer entsprechenden Umformung des Foliensubstrats 1 zu einer Rohrform dafür, dass die Spitzen 9 auf Stoß miteinander und aneinander zur Anlage gebracht werden können und dass die Außenseite 2 oder die äußere Schicht 3 entsprechend mit einem besonders geringen Energieeintrag im Bereich der Spitzen 9 unmittelbar miteinander verbunden werden können.

Die Schnittebenen S1 und S2 liegen im Druckbild der Bedruckung 31, sodass sichergestellt ist, dass das Tubenrohr vollständig mit einem Druck versehen ist. Soweit ein vorverarbeitetes Foliensubstrat zum Einsatz kommt, bei dem beispielsweise bereits eine Besäumung statt gefunden hat, kann der Schnitt entlang der Schnittebene S1 auch unterbleiben.

Außerdem können entlang der Breite B des Foliensubstrats 1 weitere fakultative Schnittebenen S₃ sowie S₄ vorgesehen sein, die beispielsweise dazu dienen einen Streifen, insbesondere einen Trimmstreifen 12.1 zu erzeugen, der dann wiederum zum Herstellen der Längsschweißnaht, also zum Verbinden der Längsrandseiten des Foliensubstrats 1 in das Innere eines zur Rohrform umgeformten Foliensubstrats 1 eingebracht werden kann.

Die Schnittebene S3 liegt außerhalb des Druckbildes der Bedruckung 31, damit sichergestellt ist, dass keine Druckfarben den Trimmstreifen 12.1 kontaminieren. Dies ist aus zwei Gründen sicherzustellen: Zunächst soll die Bedruckung 31 nicht in Kontakt mit dem Füllgut gelangen. Außerdem setzt die Bedruckung 31 die Verschweißbarkeit herab, sodass der Trimmstreifen 12.1 nicht sauber an der Naht verschweißt werden kann bzw. das Endsiegel oder die Endnaht nicht bestimmungsgemäß ausgebildet werden kann.

Fig. 2 zeigt einen Ausschnitt eines sich in der Herstellung befindlichen erfindungsgemäßen flexiblen Tubenkörpers. Der Ausschnitt zeigt den Bereich der Längsrandseiten 8' kurz vor einer Verbindung der Innenseite 13 oder der Innenseiten 13 Foliensubstrats 1 mit einem bevorzugt erwärmten und erweichten, insbesondere plastisch erweichten Streifen 12. Im Beispiel der Fig. 2 ist der Streifen ein beliebiger, für den Verschweißungsprozess und die Verbindung mit dem Foliensubstrat 1 geeigneter Streifen. Es könnte jedoch auch ein Trimmstreifen 12.1, wie er beispielhaft in der Fig. 1 erzeugt wird, als Streifen bei der Situation und dem Verfahren gemäß der Fig. 2 zum Einsatz kommen.

Die Fig. 2 zeigt einen Ausschnitt eines zur Rohrform umgeformten Foliensubstrats 1. Wie der Fig. 2 entnommen werden kann, sind die entsprechenden Längsrandseiten 8' überlappungsfrei auf Stoß aneinander angeordnet, sodass insbesondere die Spitzen 9 aneinander anliegen. Diese Anordnung wird durch Leitmittel 10 der erfindungsgemäßen Vorrichtung bereitgestellt oder ermöglicht und bis auf Weiteres aufrechterhalten. Unterhalb des Foliensubstrats 1 ist in der Darstellung der Fig. 2 bereits ein entsprechender Streifen 12 angeordnet. Alternativ könnte ein Trimmstreifen 12.1 zum Einsatz kommen, wie er beispielsweise durch die Schnittebenen S₃ und S₄ erzeugt wurde, wie sie in der Fig. 1 dargestellt sind. Der Streifen 12 kann dabei im Gegensatz zu dem Foliensubstrat 1, insbesondere im Bereich der der Außenseite, bereits erwärmt und erweicht sein. Der Streifen 12 weist jedoch noch einen Abstand zum Foliensubstrat 1, insbesondere zur Innenseite 13 des Foliensubstrats 1 auf. Soweit es sich bei dem Streifen 12 um einen Trimmstreifen handelt, wie er beispielsweise durch die Schnitte entlang der Schnittebenen S₃ und S₄ im Rahmen der Darstellung der Fig. 1 erzeugt wird, kann zudem vorgesehen sein, dass der Streifen 12 um 180° um seine Längsachse gegenüber dem Foliensubstrat 1 gedreht ist, sodass auf der Innenseite 13 des Foliensubstrats 1 und auf der Außenseite 14 des Streifens 12 sich identische Materialien oder Materialschichten gegenüberliegen, die dementsprechend miteinander verbindbar, insbesondere miteinander verschweißbar sind.

In einem auf die Darstellung der Fig. 2 folgenden Bearbeitungs- oder Verfahrensschritt, wird ein Kontakt und damit eine Verbindung zwischen dem Foliensubstrat 1 und dem Streifen 12 hergestellt, beispielsweise indem in einer senkrecht auf der Zeichenebene stehenden Längsrichtung der Abstand zwischen den Leitmitteln 10 und dem Zuführmittel 27, welches bevorzugt ein endlos umlaufendes Band 21 umfasst, verringert, beispielsweise kontinuierlich verringert wird. Dadurch kann es im Bereich der Kontaktstellen K zu einem ersten Kontakt und einer ersten Verbindung zwischen dem Foliensubstrat 1 und dem Streifen 12 kommen, wobei sich mit abnehmendem Abstand zwischen den Leitmitteln 10 und dem Zuführmittel 27 und mit gleichzeitig steigenden Druck die Kontaktstellen zu Kontaktflächen vergrößern oder verbreitern und ein eindringen des Materials des Streifens 12 in den Durchbruch 15 des Foliensubstrats erfolgt.

Wie aus der Darstellung der Fig. 2 hervorgeht, bildet sich von der Außenseite 2 des Foliensubstrats 1 im zur Rohrform umgeformten Zustand radial nach innen ein Durchbruch 15 aus, der in seiner Breite zunehmend ausgebildet ist, wobei im Bereich der Spitzen 9 die Breite als minimal anzusehen ist. Denn auch wenn die Spitzen 9 aneinander anliegen, sind diese nicht miteinander verbunden, weshalb von einem durchgängigen Durchbruch im Foliensubstrat mit einer teilweise minimalen oder annähernd verschwindenden Breite ausgegangen werden muss, die aber demnach keine Ausnehmung darstellt, die sich nur über einen Teil der Dicke des Foliensubstrates erstreckt. Der Öffnungswinkel α des Durchbruchs 15 kann beispielsweise einen Winkel zwischen 5° und 50°, bevorzugt zwischen 10 und 40° einschließen.

In einer sich an die Darstellung der Fig. 2 und die vorangehend beschriebene Verbindung zwischen Foliensubstrat 1 und Streifen 12 anschließenden Verfahrenssituation des erfindungsgemäßen Verfahrens kann durch, in der Fig. 2 nicht dargestellte äußere Heizmittel, die im Bereich der Leitmittel 10 angeordnet sein können, eine besonders schonende und wenig Energie benötigende Verbindung zwischen den Längsrandseiten 8' im Bereich der Außenseite 2 des Foliensubstrats 1 hergestellt werden. Diese erscheint dann bei einer geeigneten Wahl der Schnittebenen S₁ und S₂ bezüglich der Bedruckung auf der Außenseite 2 fast nahtlos und beschädigt oder beeinträchtigt die besagte Bedruckung nicht.

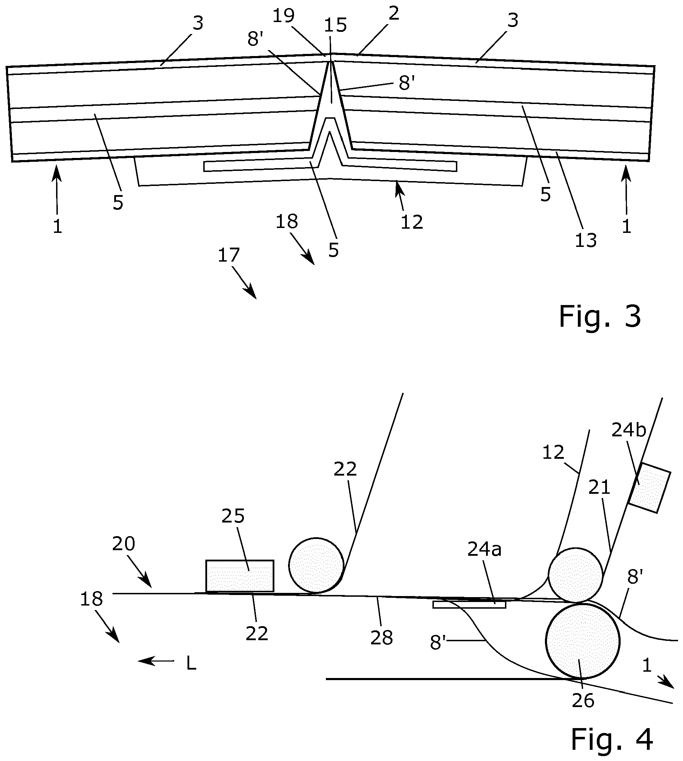

In der Fig. 2 ist ebenfalls dargestellt, dass sowohl das Foliensubstrat 1 und damit bei der Herstellung gemäß der Fig. 1, auch der Streifen 12 eine Barriereschicht 5 umfassen. In der Situation oder dem Verfahrensstadium der Fig. 2 sind dabei sowohl an den Längsrandseiten 8' als auch an den Randseiten 16 des Streifens 12 Bereiche vorhanden, an denen der Barriere-Layer oder die Barriereschicht 5 offen liegt und damit potentiell mit dem im Inneren 17 des Tubenkörpers 18 anzuordnenden Tubeninhalt in Kontakt kommen könnte. Ein derartiger Kontakt zwischen der Barriereschicht 5 und dem Inneren 17 der Verpackungstube bzw. der dort befindlichen Tubenfüllung soll jedoch in aller Regel vermieden werden. Eine entsprechende Lösung ist in dem Zustand des Verfahrens und des Tubenkörpers 18 gemäß der Darstellung der Fig. 3 zu entnehmen.

In dem Zustand der Fig. 3 wurde, wie oben skizziert, eine entsprechend unmittelbare Verbindung der Längsrandseiten 8' auf der Außenseite 2 des Foliensubstrats 1 oder im Bereich der äußeren Schicht 3 des Foliensubstrats 1 hergestellt. Die Verbindung erstreckt sich bevorzugt über die äußere Schicht 3, welche beispielsweise eine Stärke oder Dicke von 10µm bis 50µm aufweist. Diese wurde jedoch erst erzeugt, nachdem der bereits erwärmte und erweichte Streifen 12 auf der Innenseite oder im Inneren 17 des zur Rohrform umgeformten Foliensubstrats 1 im Bereich der Längsrandseiten 8' an das Foliensubstrat 1 herangeführt und angepresst wurde. Durch den zuerst ausgeführten und letztgenannten Schritt ist einerseits ein Teil des Materials des Streifens 12, insbesondere da dieser entsprechend erwärmt und erweicht, insbesondere plastisch erweicht, war, teilweise in den in der Fig. 2 dargestellten Durchbruch 15 eingedrungen oder eingeflossen, jedoch nur so weit oder so viel, dass die aneinander anliegenden Spitzen 9 nicht verschoben, insbesondere auseinandergedrückt werden. Letzteres kann durch entsprechende Leitmittel der Vorrichtung erreicht werden, wie sie stark schematisiert als Leitmittel 10 dargestellt sind. Die anschließende, wenig thermische Energie benötigende Verbindung der Längsrandseiten 8' mit sich selbst im Bereich der Außenseiten 2 hat hier zusätzlich zu einer unmittelbaren Verbindung im Bereich der Außenseite 2 geführt. Weiter hat das entsprechend in den Durchbruch 15 eingedrungene Material des Streifens 12 eine Abdeckung oder Versiegelung der offen liegenden Bereiche der Barriereschicht 5 bewirkt. Zudem ist durch die entsprechende Druckeinwirkung auf den Streifen 12 und das Foliensubstrat 1 ein gewisses Zerfließens des Streifens 12 bewirkt worden, sodass der Streifen 12 beispielsweise in etwa die Hälfte seiner ursprünglichen Stärke oder Dicke verloren hat, umgekehrt aber beispielsweise etwa eine doppelt so große Breite aufweist, wie vor der Kontaktierung mit dem Foliensubstrat 1 und der entsprechenden Druckbeaufschlagung. Da die Barriereschicht 5 entsprechend schwerer oder gar nicht zerfließt, hat diese radiale Verjüngung unter gleichzeitiger Verbreiterung des Streifens 12 dazu geführt, dass auch die in der Fig. 2 noch freiliegenden Bereiche der Barriereschicht 5 des Streifens 12 abgedeckt oder verdeckt wurden und somit nicht mehr in Kontakt mit dem Inneren 17 des Tubenkörpers 18 stehen.

Fig. 3 zeigt demnach die besonders vorteilhafte Verbindung im Bereich der Längsschweißnaht oder im Bereich der Längsrandseiten 8'. Denn einerseits besteht eine unmittelbare Verbindung 19 im Bereich der Außenseite 2 oder im Bereich der äußeren Schicht 3 des Foliensubstrats 1, sodass bei einer entsprechend genauen Schnittführung der Schnittebenen S₁ und S₂ eine scheinbar ununterbrochene und nahtlose Bedruckung der Außenseite 2 des Foliensubstrats 1 erreicht wird, auch weil die Verbindung mit sehr wenig thermischer Energie hergestellt wird und damit wenig bis keinen nachteiligen Einfluss auf die Außenseite 2 oder die Außenseiten 2 ausübt.

Gleichzeitig ist sowohl auf der Innenseite 13 des Foliensubstrats 1 als auch im Bereich des Durchbruchs 15 eine wirkungsvolle Verbindung, nämlich über das Material des Streifens 12 hergestellt worden, sodass eine äußerst stabile Längsschweißnaht des Tubenkörpers 18 erzielt wurde. Die mechanische Stabilität wird auch dadurch gewährleistet, dass einerseits im Bereich der Längsrandseiten 8' im Streifen 12 eingebettet ein entsprechender Teil einer Barriereschicht 5 angeordnet ist, die zur mechanischen Stabilisierung der Längsschweißnaht beiträgt. Außerdem ist die Verbindung zwischen dem Streifen 12 und der Innenseite 13 des Foliensubstrats 1 besonders wirkungsvoll, da hier identische Materialien miteinander verbunden sind, die eine entsprechend gute und stabile Verbindung miteinander eingehen, insbesondere entsprechend gut miteinander verschweißt sind. Verwendet man an Stelle des Trimmstreifens einen Streifen, dessen Oberflächen mit der inneren Oberfläche, inneren Schicht 7 oder Innenseite 13 verschweißbar sind, so kann für die äußere Schicht 3 auch ein Material gewählt werden, welches nicht mit der inneren Schicht 7 verschweißbar ist.

Fig. 4 zeigt eine schematische Darstellung einer erfindungsgemäßen Vorrichtung. Dabei wird von der rechten Seite ein im wesentlich ebenes Foliensubstrat 1 zugeführt, welches in einer Längsrichtung nach links läuft und nach dem Verlassen der Vorrichtung 20 einen noch endlosen und entsprechend zu separierenden und ggf. mit einem Tubenkopf zu verbindenden, flexiblen Tubenkörper 18 ausbildet. Durch in der Darstellung der Fig. 4 nicht dargestellte Zuschnittwerkzeuge, insbesondere Besäumungswerkzeuge mit entsprechenden Messern, insbesondere Besäumungsmesser können die in der Fig. 1 dargestellten Umformungen des Foliensubstrats 1 insbesondere Zuschnitte des Foliensubstrats 1 durchgeführt werden. Sofern ein entsprechender Trimmstreifen erzeugt wird, kann dieser nach seinem Abseparieren vom Foliensubstrat 1 entsprechend auf einer Speichereinrichtung zwischengespeichert werden, die ebenfalls in der Fig. 4 nicht dargestellt ist. Die Vorrichtung umfasst zudem zwei endlos umlaufende Bänder 21, 22, wobei beim äußeren Band 22 und inneren Band 21 ein Teil des gesamten Bandes dargestellt ist.

Noch bevor oder parallel zu einer Umformung des Foliensubstrats 1 zu einer entsprechenden Rohrform mittels entsprechender Umformmittel um einen Dorn 26 wird der Streifen 12, der ggf. als Trimmstreifen ausgebildet sein kann, dem inneren Band 21 zugeführt. Dabei kann über innere Heizmittel 24a, 24b das innere Band 21 und/oder der Streifen 12 vorgewärmt werden, sodass eine Erwärmung und, bevorzugt plastische, Erweichung des Streifens 12 eintritt, bevor dieser, beispielsweise auf dem inneren Band 21 in das zur Rohrform umgeformte Foliensubstrat 1 eingeführt oder zugeführt wird. Die Umformmittel können beispielsweise das Foliensubstrat 1 zu einer Rohrform umformen, die dann überlappungsfrei bzw. mit ihren Längsrandseiten 8' im Bereich der Spitze oder der Spitzen der Außenseite 2 aneinander anliegen, wie es beispielsweise in der Fig. 2 gezeigt ist. Dann erfolgt die oben bereits beschriebene Verbindung zwischen dem weichen warmen Streifen 12 und dem Foliensubsrat 1, beispielsweise ab dem Erstkontaktpunkt 28, ab dem ein Kontakt, bevorzugt an den Kontaktstellen K, vorliegt und ab dem der Kontakt oder die Kontaktfläche in Längsrichtung L durch einen entsprechenden Anpressdruck vergrößert wird. Nachdem diese Verbindung hergestellt ist und der Streifen 12 in einer verformten, teilweise in den Durchbruch eingeflossenen Form bereits wieder abkühlt und erhärtet oder bereits erhärtet und abgekühlt ist, wird durch die äußeren Heizmittel 25 dann ein entsprechender Energieeintrag sichergestellt, der dazu führt, dass die Längsrandseiten 8' im Bereich der Außenseite 2 des Foliensubstrats 1 unmittelbar miteinander verbunden werden.

### Bezugszeichen

- 1: Foliensubstrat
- 2: Außenseite
- 3: äußere Schicht
- 4: Schichtanordnung
- 5: Barriereschicht
- 6: Schichtanordnung
- 7: innere Schicht
- 8, 8': Längsrandseiten
- 9: Spitze
- 10: Leitmittel
- 12: Streifen
- 12.1: Trimmstreifen
- 13: Innenseite
- 14: Außenseite
- 15: Durchbruch
- 16: Randseiten
- 17: Inneres
- 18: Tubenkörper
- 19: Verbindung
- 20: Vorrichtung
- 21: Band
- 22: Band
- 24: innere Heizmittel
- 25: äußere Heizmittel
- 26: Dorn
- 27: Zuführmittel
- 28: Kontaktpunkt
- 31: Bedruckung
- A: Öffnungswinkel
- D: Dickenrichtung
- B: Breite
- L: Längsrichtung
- K: Kontaktstelle
- A: Öffnungswinkel
- S1, S2: Schnittebene
- S3, S4: Schnittebene

## Patentansprüche

1. Verfahren zum Herstellen von flexiblen Tubenkörpern für Verpackungstuben aus einem, bevorzugt auf einer Außenseite **(2)** eine Bedruckung aufweisenden, Foliensubstrat **(1),** welches mindestens eine verschweißbare Kunststoffschicht aufweist oder aus dieser besteht und welches eine eine sich in eine Längsrichtung erstreckende erste Längsrandseite **(8)** und eine hierzu parallele und beabstandete zweite Längsrandseite **(8)** umfasst, wobei das Foliensubstrat **(1)** mit Umformmitteln **(23)** zu einer Rohrform geformt und die beiden Längsrandseiten **(8,)** unter Ausbildung einer Längsschweißnaht, insbesondere miteinander verschweißt werden, wobei im Bereich der Stoßstelle und/oder der Längsschweißnaht im Inneren **(17)** des zur Rohrform umgeformten Foliensubstrats **(1)** ein Streifen **(12)** angeordnet und zumindest bereichsweise oder abschnittsweise mit den Längsrandseiten **(8)** verbunden, insbesondere verschweißt wird,
**dadurch gekennzeichnet,**
**dass** zumindest eine Längsrandseite **(8')** vor dem Ausbilden der Längsschweißnaht so umgeformt, insbesondere zugeschnitten, wird, dass die Längsrandseiten **(8, 8')** bei dem zur Rohrform umgeformte Foliensubstrat **(1)** radial nur im Bereich der Außenseite **(2)** mit zumindest einer durch die Umformung gebildeten Spitze **(9),** insbesondere auf Stoß, aneinander anliegen.

2. Verfahren nach Anspruch 1,
**dadurch gekennzeichnet,**
**dass** mit äußeren Heizmitteln **(25)** ein Verbinden, insbesondere Verschweißen, der Außenseite **(2)** des Foliensubstrats **(1)** im Bereich der zumindest einen Spitzen **(9)** der Längsrandseiten **(8, 8')** im Rahmen der Ausbildung der Längsschweißnaht erfolgt, nachdem die von der Außenseite **(2)** abgewandte Innenseite (13) mit dem Streifen **(12)** verbunden, insbesondere verschweißt wird.

3. Verfahren nach Anspruch 1 oder 2,
**dadurch gekennzeichnet,**
**dass** beim Umformen, insbesondere Zuschneiden, der zumindest einen Längsrandseite **(8')** des Foliensubstrats **(1)** jeweils eine zu einer Dickenrichtung **(D)** des Foliensubstrats **(1)** schräg verlaufende Kante, insbesondere Schnittkante, erzeugt wird, wobei die Schräge derart orientiert ist, dass beim Umformen des Foliensubstrats **(1)** zur Rohrform ein von der Außenseite **(2)** nach innen breiter werdender Durchbruch **(15)** erzeugt wird.

4. Verfahren nach einem der Ansprüche 1 bis 3,
**dadurch gekennzeichnet,**
**dass** die die Umformung der Längsrandseiten **(8')** derart erfolgt, dass der Durchbruch **(15)** einen Winkel von 5° bis 50°, bevorzugt von 10° bis 40°, einschließt.

5. Verfahren nach einem der Ansprüche 1 bis 4,
**dadurch gekennzeichnet,**
**dass** die beiden Längsrandseiten **(8')** des Foliensubstrats **(1)** umgeformt werden, so dass bei dem zur Rohrform **(2)** umgeformten Foliensubstrat **(1)** die durch die Umformung gebildete Spitzen **(9),** insbesondere auf Stoß, aneinander anliegen.

6. Verfahren nach einem der Ansprüche 1 bis 5,
**dadurch gekennzeichnet,**
**dass** zumindest eine Längsrandseite **(8)** im Rahmen eines Besäumungsschrittes mit einem Besäumungswerkzeug, insbesondere mit einem Besäumungsmesser, in Längsrichtung **(L)** unter Erzeugung eines vom Foliensubstrat **(1)** abgetrennten Trimmstreifens **(12.1)** zugeschnitten wird, wobei der Trimmstreifen **(12.1)** als Streifen **(12)** innerhalb des zur Rohrform umgeformten Foliensubstrats **(1)** im Bereich der Stoßstelle der Längsrandseiten **(8, 8')** und/oder der Längsschweißnaht angeordnet und mit dem Foliensubstrat **(1),** insbesondere mit den Längsrandseiten **(8, 8'),** verschweißt wird.

7. Verfahren nach Anspruch 6,
**dadurch gekennzeichnet,**
**dass** der Trimmstreifen **(12.1)** bei oder nach seiner Abtrennung vom Foliensubstrat **(1),** insbesondere vor dem Zuführen in das Innere **(17)** des zur Rohrform umgeformten Foliensubstrats **(1),** seinerseits zumindest einseitig mit Besäumungswerkzeugen, insbesondere mit Besäumungsmessern in Längsrichtung **(L)** zugeschnitten wird.

8. Verfahren nach Anspruch 6 oder 7,
**dadurch gekennzeichnet,**
**dass** der Trimmstreifen **(12.1)** zwischen seiner Abtrennung vom Foliensubstrat **(1)** und seiner Einführung in das Innere **(17)** des zur Rohrform umgeformten Foliensubstrats **(1)** auf einer Speichereinrichtung zwischengespeichert wird.

9. Verfahren nach einem der Ansprüche 1 bis 8,
**dadurch gekennzeichnet,**
**dass** der Streifen **(12),** insbesondere der Trimmstreifen **(12.1),** mit inneren Heizmitteln **(24a, 24b)** erwärmt wird und in einem erwärmten und dadurch erweichten, bevorzugt plastisch erweichten, Zustand in das Innere **(17)** des zum Rohrkörper umgeformten Foliensubstrats **(1)** eingebracht und, insbesondere vor dem Verschweißen der Außenseite **(2)** mit sich selbst, an den Längsrandseiten **(8, 8')** zur Anlage kommt.

10. Verfahren nach Anspruch 9,
**dadurch gekennzeichnet,**
**dass** der Streifen **(12),** insbesondere der Trimmstreifen **(12.1),** bei der Verbindung mit dem Foliensubstrat, eine Verbreiterung quer zur Längsrichtung **(L)** erfährt, so dass das Verhältnis einer Breite nach der Verbindung mit dem Foliensubstrat zu einer ursprünglichen Breite größer ist als 1,5, wobei bevorzugt der Streifen **(12)** oder Trimmstreifen **(12.1)** auch, insbesondere gleichzeitig, eine Verflachung quer zur Längsrichtung **(L)** erfährt, so dass das Verhältnis einer Höhe nach der Verbindung mit dem Foliensubstrat zu der ursprünglichen Höhe kleiner ist als 2/3.

11. Verfahren nach einem der Ansprüche 1 bis 9,
**dadurch gekennzeichnet**,
der Streifen **(12),** insbesondere Trimmstreifen **(12.1),** mit Zuführmitteln (27) auf einem endlosen umlaufenden Band **(21)** abgelegt und, insbesondere auf dem Band **(21)** in das Innere **(17)** des zum Rohrkörper umgeformten Foliensubstrats **(1)** eingeführt wird.

12. Flexibler Tubenkörper für Verpackungstuben, insbesondere hergestellt nach einem Verfahren nach einem der Ansprüchen 1 bis 10, aus einem bevorzugt auf einer Außenseite **(29)** eine Bedruckung aufweisenden, Foliensubstrat **(1),** welches mindestens eine verschweißbare Kunststoffschicht aufweist oder aus dieser besteht und welches eine eine sich in eine Längsrichtung **(L)** erstreckende erste Längsrandseite **(8)** und eine hierzu parallele und beabstandete zweite Längsrandseite **(8)** umfasst, welche mit Umformmitteln **(23)** zu einer Rohrform geformt und die beiden Längsrandseiten **(8)** mit einer Längsschweißnaht, insbesondere miteinander verschweißt sind, wobei im Bereich der Stoßstelle und/oder der Längsschweißnaht im Inneren **(17)** des zur Rohrform umgeformten Foliensubstrats **(1)** ein Streifen **(12)** angeordnet und zumindest bereichsweise oder abschnittsweise mit den Längsrandseiten **(8)** verbunden, insbesondere verschweißt ist, **dadurch gekennzeichnet,**
**dass** zumindest eine Längsrandseite **(8')** so umgeformt, insbesondere zugeschnitten, ist, dass die Längsrandseiten **(8, 8')** bei dem zur Rohrform umgeformten Foliensubstrat **(1)** radial nur im Bereich der Außenseite **(2)** mit zumindest einer durch die Umformung gebildeten Spitze **(9)** unmittelbar miteinander verbunden sind.

13. Tubenkörper nach Anspruch 12,
**dadurch gekennzeichnet,**
**dass** die zumindest eine umgeformte Längsrandseite **(8')** des Foliensubstrats **(1)** jeweils eine zu einer Dickenrichtung **(D)** des Foliensubstrats **(1)** schräg verlaufende Schnittkante aufweist, wobei die Schräge derart orientiert ist, dass beim Umformen des Foliensubstrats **(1)** zur Rohrform ein von der Außenseite **(2)** radial nach innen breiter werdender Durchbruch (15) erzeugt wird.

14. Tubenkörper nach Anspruch 12 oder 13,
**dadurch gekennzeichnet,**
**dass** die Umformung der Längsrandseiten **(8')** derart erfolgt, dass der Durchbruch **(15)** einen Winkel oder Öffnungswinkel von 5° bis 50°, bevorzugt von 10° bis 40° einschließt.

15. Tubenkörper nach einem der Ansprüche 12 bis 14,
**dadurch gekennzeichnet,**
**dass** der Durchbruch **(15)** teilweise, insbesondere mit Ausnahme der Außenseite (2) und/oder der äußeren Schicht (3), mit Material des Streifens **(12)** ausgefüllt ist.

16. Tubenkörper nach einem der Ansprüche 12 bis 15,
**dadurch gekennzeichnet,**
**dass** die beiden Längsrandseiten **(8')** des Foliensubstrats **(1)** so umgeformt sind, dass bei dem zur Rohrform umgeformten Foliensubstrat **(1)** radial im Bereich der Außenseite **(2)**die durch die Umformung gebildeten Spitzen **(9),** insbesondere auf Stoß, unmittelbar miteinander verbunden sind.

17. Tubenkörper nach einem der Ansprüche 12 bis 16,
**dadurch gekennzeichnet,**
**dass** der Streifen **(12)** durch einen Trimmstreifen **(12.1)** des Foliensubstrats **(1)** gebildet ist, der im Rahmen eines Besäumungsprozesses von dem Foliensubstrat **(1)** abgetrennt wird.

18. Vorrichtung zur Herstellung von flexiblen Tubenkörpern für Verpackungstuben aus einem, bevorzugt auf einer Außenseite **(2)** eine Bedruckung aufweisenden, Foliensubstrat **(1),** welches mindestens eine verschweißbare Kunststoffschicht aufweist oder aus dieser besteht und welches eine eine sich in eine Längsrichtung erstreckende erste Längsrandseite **(8)** und eine hierzu parallele und beabstandete zweite Längsrandseite **(8)** umfasst, wobei das Foliensubstrat **(1)** mit Umformmitteln **(23)** zu einer Rohrform geformt und die beiden Längsrandseiten unter Ausbildung einer Längsschweißnaht, insbesondere miteinander verschweißt werden, wobei mit Zuführmitteln im Bereich der Stoßstelle und/oder der Längsschweißnaht im Inneren **(17)** des zur Rohrform umgeformten Foliensubstrats **(1)** ein Streifen **(12)** angeordnet und mit Verbindungsmitteln zumindest bereichsweise oder abschnittsweise mit den Längsrandseiten **(8)** verbunden, insbesondere verschweißt wird,
**gekennzeichnet durch**
Randumformmittel zum Umformen, insbesondere Zuschneiden, zumindest einer Längsrandseite **(8')** vor dem Ausbilden der Längsschweißnaht, wobei die Umformmittel **(23)** zum Erzeugen der Rohrform so ausgebildet sind, dass die Längsradseiten **(8, 8')** bei dem zur Rohrform umgeformte Foliensubstrat **(1)** radial nur im Bereich der Außenseite **(2)** mit zumindest einer durch die Umformung gebildeten Spitze (**9),** insbesondere auf Stoß, aneinander anliegen.

19. Vorrichtung nach Anspruch 18,
**gekennzeichnet durch**
äußere Heizmitteln **(25)** zum Verbinden, insbesondere Verschweißen, der Außenseite **(2)** des Foliensubstrats **(1)** im Bereich der zumindest einen Spitzen **(9)** der Längsrandseiten **(8')** im Rahmen der Ausbildung der Längsschweißnaht, wobei die äußeren Heizmittel **(25)** derart angeordnet sind, dass die Verbindung der Außenseite **(2)** erfolgt, nachdem die von der Außenseite **(2)** abgewandte Innenseite **(13)** mit dem Streifen **(12)** verbunden, insbesondere verschweißt wird.

20. Vorrichtung nach Anspruch 18 oder 19,
**dadurch gekennzeichnet,**
**dass** die Randumformmittel derart angeordnet und ausgebildet sind, dass beim Umformen der zumindest einen Längsrandseite **(8)** des Foliensubstrats **(1)** jeweils eine zu einer Dickenrichtung **(D)** des Foliensubstrats **(1)** schräg verlaufende Kante, insbesondere Schnittkante, erzeugt wird, wobei die Schräge derart orientiert ist, dass beim Umformen des Foliensubstrats **(1)** zur Rohrform ein von der Außenseite **(2)** nach innen breiter werdender Durchbruch **(15)** erzeugt wird.

21. Vorrichtung nach einem der Ansprüche 18 bis 20,
**gekennzeichnet durch** ein
Besäumungswerkzeug, insbesondere mit einem Besäumungsmesser, das zumindest im Rahmen eines Besäumungsschrittes einer Längsrandseite **(8, 8')** in Längsrichtung **L)** unter Erzeugung eines vom Foliensubstrat **(1)** abgetrennten Trimmstreifens **(12.1)** zuschneidet, wobei der Trimmstreifen **(12.1)** als Streifen **(12)** innerhalb des zur Rohrform umgeformten Foliensubstrats **(1)** im Bereich der Stoßstelle der Längsrandseiten **(8, 8')** und/oder der Längsschweißnaht angeordnet und mit dem Foliensubstrat **(1),** insbesondere mit den Längsrandseiten **(8, 8'),** verschweißt wird.

22. Vorrichtung nach einem der Ansprüche 18 bis 21,
**gekennzeichnet durch**
innere Heizmittel, welche den Streifen **(12),** insbesondere den Trimmstreifen **(12.1),** erwärmen, insbesondere bis zu einer plastischen Erweichung erwärmen, wobei die inneren Heizmittel **(24)** derart angeordnet sind, dass der Streifen **(12)** in einem erwärmten und dadurch erweichten Zustand mit Zuführmitteln in das Innere **(17)** des zur Rohrform umgeformten Foliensubstrats **(1)** eingebracht und der Innenseite (13), insbesondere auch an den Längsrandseiten **(8, 8'),** zur Anlage kommt.

## Claims

1. A method for producing flexible tube bodies for packaging tubes from a film substrate **(1)** preferably having a print on an outer side **(2)** and having or consisting of at least one weldable plastic layer and comprising a first longitudinal edge side **(8)** extending in a longitudinal direction and a second longitudinal edge side **(8)** parallel thereto and spaced apart therefrom, the film substrate **(1)** being deformed into a tube shape by means of deforming means **(23)** and the two longitudinal edge sides **(8)** being in particular welded to one another, a longitudinal weld seam being formed in the process, a strip **(12)** being arranged in the area of the joint and/or of the longitudinal weld seam inside **(17)** the film substrate **(1)** deformed into the tube shape and being connected, in particular welded, to the longitudinal edge sides **(8)** at least in some areas or sections,
**characterized in that**,
prior to the formation of the longitudinal weld seam, at least one longitudinal edge side **(8')** is reshaped, in particular cut, in such a manner that the longitudinal edge sides **(8, 8')** of the film substrate **(1)** deformed into the tube shape contact one another, in particular edge to edge, radially only in the area of the outer side **(2)** via at least one tip **(9)** formed by the reshaping.

2. The method according to claim 1,
**characterized in that**,
in the course of the formation of the longitudinal weld seam, the outer side (2) of the film substrate **(1)** is connected, in particular welded, in the area of the at least one tip **(9)** of the longitudinal edge sides **(8, 8')** by means of outer heating means **(25)** after the inner side (13) facing away from the outer side **(2)** is connected, in particular welded, to the strip **(12).**

3. The method according to claim 1 or 2,
**characterized in that**
when the at least one longitudinal edge side **(8')** of the film substrate **(1)** is reshaped, in particular cut, an edge, in particular a cutting edge, extending obliquely in relation to a thickness direction **(D)** of the film substrate **(1)** is produced in each case, the bevel being oriented in such a manner that an opening **(15)** widening from the outer side **(2)** to the inner side is produced when the film substrate **(1)** is deformed into the tube shape.

4. The method according to any one of claims 1 to 3,
**characterized in that**
the longitudinal edge sides **(8')** are reshaped in such a manner that the opening **(15)** encloses an angle of 5° to 50°, preferably of 10° to 40°.

5. The method according to any one of claims 1 to 4,
**characterized in that**
both longitudinal edge sides **(8')** of the film substrate **(1)** are reshaped, the tips **(9)** formed by the reshaping thus contacting one another, in particular edge to edge, when the film substrate **(1)** is deformed into the tube shape **(2).**

6. The method according to any one of claims 1 to 5,
**characterized in that**,
in the course of a trimming step, at least one longitudinal edge side **(8)** is cut in the longitudinal direction **(L)** by means of a trimming tool, in particular a trimming knife, a trimming strip **(12.1)** separated from the film substrate **(1)** being produced in the process, wherein the trimming strip **(12.1)** is arranged as a strip **(12)** in the area of the joint of the longitudinal edge sides **(8, 8')** and/or of the longitudinal weld seam within the film substrate **(1)** deformed into the tube shape and is welded to the film substrate **(1),** in particular to the longitudinal edge sides **(8, 8').**

7. The method according to claim 6,
**characterized in that**
during or after the separation of the trimming strip **(12.1)** from the film substrate **(1),** in particular prior to the feeding into the inside **(17)** of the film substrate **(1)** deformed into the tube shape, at least one side of the trimming strip **(12.1)** itself is cut in the longitudinal direction **(L)** by means of trimming tools, in particular trimming knives.

8. The method according to claim 6 or 7,
**characterized in that**
between the separation of the trimming strip **(12.1)** from the film substrate **(1)** and its insertion into the inside **(17)** of the film substrate **(1)** deformed into the tube shape, the trimming strip **(12.1)** is temporarily stored on a storage means.

9. The method according to any one of claims 1 to 8,
**characterized in that**
the strip **(12),** in particular the trimming strip **(12.1),** is heated by means of inner heating means **(24a, 24b)** and is inserted into the inside **(17)** of the film substrate **(1)** deformed into the tube body in a heated and therefore softened, preferably plastically softened, state and comes into contact with the longitudinal edge sides **(8, 8'),** in particular before the outer side **(2)** is welded to itself.

10. The method according to claim 9,
**characterized in that**
during the connection to the film substrate, the strip **(12),** in particular the trimming strip **(12.1),** is widened transverse to the longitudinal direction **(L),** the ratio of a width after the connection to the film substrate in relation to an original width thus being greater than 1.5, the strip **(12)** or trimming strip **(12.1)** also being flattened transverse to the longitudinal direction **(L),** in particular at the same time, the ratio of a height after the connection to the film substrate in relation to the original height thus being smaller than 2/3.

11. The method according to any one of claims 1 to 9,
**characterized in that**
the strip **(12),** in particular the trimming strip **(12.1),** is placed on a circulating endless belt **(21)** by means of feeding means (27) and is inserted into the inside **(17)** of the film substrate **(1)** deformed into the tube body, in particular on the belt **(21).**

12. A flexible tube body for packaging tubes, in particular produced according to a method according to any one of claims 1 to 10, made of a film substrate **(1)** preferably having a print on an outer side **(29),** the film substrate **(1)** having or consisting of at least one weldable plastic layer and comprising a first longitudinal edge side **(8)** extending in a longitudinal direction **(L)** and a second longitudinal edge side **(8)** parallel thereto and spaced apart therefrom, the film substrate **(1)** being deformed into a tube shape by means of deforming means **(23)** and the two longitudinal edge sides **(8)** being in particular welded to one another by means of a longitudinal weld seam, a strip **(12)** being arranged in the area of the joint and/or of the longitudinal weld seam inside **(17)** the film substrate **(1)** deformed into the tube shape and being connected, in particular welded, to the longitudinal edge sides **(8)** at least in some areas or sections, **characterized in that**
at least one longitudinal edge side **(8')** is reshaped, in particular cut, in such a manner that the longitudinal edge sides **(8, 8')** of the film substrate **(1)** deformed into the tube shape are directly connected to one another radially only in the area of the outer side **(2)** via at least one tip **(9)** formed by the reshaping.

13. The tube body according to claim 12,
**characterized in that**
the at least one reshaped longitudinal edge side **(8')** of the film substrate **(1)** has a cutting edge which extends obliquely in relation to a thickness direction **(D)** of the film substrate **(1)** in each case, the bevel being oriented in such a manner that an opening (15) widening from the outer side **(2)** to the inner side in the radial direction is produced when the film substrate **(1)** is deformed into the tube shape.

14. The tube body according to claim 12 or 13,
**characterized in that**
the longitudinal edge sides **(8')** are reshaped in such a manner that the opening **(15)** encloses an angle or opening angle of 5° to 50°, preferably of 10° to 40°.

15. The tube body according to any one of claims 12 to 14,
**characterized in that**
the opening **(15)** is partially filled with material of the strip **(12),** in particular with the exception of the outer side (2) and/or of the outer layer (3).

16. The tube body according to any one of claims 12 to 15,
**characterized in that**
both longitudinal edge sides **(8')** of the film substrate **(1)** are reshaped in such a manner that the tips **(9)** formed by the reshaping are directly connected to one another, in particular edge to edge, radially in the area of the outer side **(2)** when the film substrate **(1)** is deformed into the tube shape.

17. The tube body according to any one of claims 12 to 16,
**characterized in that**
the strip **(12)** is formed by a trimming strip **(12.1)** of the film substrate **(1),** the trimming strip **(12.1)** being separated from the film substrate **(1)** in the course of a trimming process.

18. A device for producing flexible tube bodies for packaging tubes from a film substrate **(1)** preferably having a print on an outer side **(2)** and having or consisting of at least one weldable plastic layer and comprising a first longitudinal edge side **(8)** extending in a longitudinal direction and a second longitudinal edge side **(8)** parallel thereto and spaced apart therefrom, the film substrate **(1)** being deformed into a tube shape by means of deforming means **(23)** and the two longitudinal edge sides being in particular welded to one another, a longitudinal weld seam being formed in the process, a strip **(12)** being arranged in the area of the joint and/or of the longitudinal weld seam inside **(17)** the film substrate **(1)** deformed into the tube shape by means of feeding means and being connected, in particular welded, to the longitudinal edge sides **(8)** at least in some areas or sections by means of connecting means,
**characterized by**
edge reshaping means for reshaping, in particular cutting, at least one longitudinal edge side **(8')** before the longitudinal weld seam is formed, the deforming means **(23)** for forming the tube shape being realized in such a manner that the longitudinal edge sides **(8, 8')** of the film substrate **(1)** deformed into the tube shape contact one another, in particular edge to edge, radially only in the area of the outer side **(2)** via at least one tip **(9)** formed by the reshaping.

19. The device according to claim 18,
**characterized by**
outer heating means **(25)** for connecting, in particular welding, the outer side **(2)** of the film substrate **(1)** in the area of the at least one tips **(9)** of the longitudinal edge sides **(8')** when the longitudinal weld seam is formed, the outer heating means **(25)** being arranged in such a manner that the connection of the outer side **(2)** takes place after the inner side **(13)** facing away from the outer side **(2)** is connected, in particular welded, to the strip **(12).**

20. The device according to claim 18 or 19,
**characterized in that**
the edge reshaping means are disposed and realized in such a manner that an edge, in particular a cutting edge, extending obliquely in relation to a thickness direction **(D)** of the film substrate **(1)** is produced in each case when the at least one longitudinal edge side **(8)** of the film substrate **(1)** is reshaped, the bevel being oriented in such a manner that an opening **(15)** widening from the outer side **(2)** to the inner side is produced when the film substrate **(1)** is deformed into the tube shape.

21. The device according to any one of claims 18 to 20,
**characterized by**
a trimming tool, in particular having a trimming knife, which cuts a longitudinal edge side **(8, 8')** in the longitudinal direction **(L)**, at least in the course of a trimming step, a trimming strip **(12.1)** separated from the film substrate **(1)** being produced in the process, wherein the trimming strip **(12.1)** is arranged as a strip **(12)** in the area of the joint of the longitudinal edge sides **(8, 8')** and/or of the longitudinal weld seam within the film substrate **(1)** deformed into the tube shape and is welded to the film substrate **(1)**, in particular to the longitudinal edge sides **(8, 8')**.

22. The device according to any one of claims 18 to 21,
**characterized by**
inner heating means heating the strip **(12)**, in particular the trimming strip **(12.1)**, in particular until a plastic softening is reached, the inner heating means **(24)** being arranged in such a manner that the strip **(12)** is inserted into the inside **(17)** of the film substrate **(1)** deformed into the tube shape in a heated and therefore softened state by means of feeding means and comes into contact with the inner side **(13)**, in particular also with the longitudinal edge sides **(8, 8')**.

## Revendications

1. Procédé pour produire des corps de tube flexibles pour des tubes d'emballage d'un substrat en film **(1)** qui a, de préférence, une impression sur le côté extérieur **(2)** et qui a au moins une couche de matière plastique soudable ou consiste en celle-ci et qui comprend un premier côté de bord **(8)** longitudinal s'étendant dans une direction longitudinale et un deuxième côté de bord **(8)** longitudinal parallèle par rapport à et espacé de celui-ci, le substrat en film **(1)** étant formé en forme de tube moyennant des moyens de formage **(23)** et les deux côtés de bord **(8)** longitudinaux étant soudés, notamment l'un avec l'autre, formant ainsi une soudure longitudinale, dans la zone du joint et/ou de la soudure longitudinale à l'intérieur **(17)** du substrat en film **(1)** mis en forme de tube, une bande **(12)** étant disposée et au moins par endroits ou par sections reliée aux côtés de bord **(8)** longitudinaux, notamment soudés avec ceux-ci,
**caractérisé en ce**
**qu'**au moins un côté de bord **(8')** longitudinal est mis en forme, notamment coupé, avant que la soudure longitudinale soit formée de manière que les côtés de bord **(8, 8')** longitudinaux dans le cas du substrat en film **(1)** mis en forme de tube viennent en contact l'un avec l'autre, notamment bord à bord, radialement seulement dans la zone du côté extérieur **(2)** avec au moins un bout **(9)** formé par le formage.

2. Procédé selon la revendication 1,
**caractérisé en ce**
**qu'**une liaison, notamment un soudage, du côté extérieur **(2)** du substrat en film **(1)** est effectué(e) dans la zone de l'au moins un bout **(9)** des côtés de bord **(8, 8')** longitudinaux dans le cadre de la formation de la soudure longitudinale moyennant des moyens de chauffage **(25)** extérieurs après que le côté intérieur (13) opposé au côté extérieur **(2)** a été relié à, notamment soudé avec, la bande **(12)**.

3. Procédé selon la revendication 1 ou 2,
**caractérisé en ce que**
lorsque l'au moins un côté de bord **(8')** longitudinal du substrat en film **(1)** est mis en forme, notamment coupé, une arête, notamment une arête de coupe, s'étendant obliquement par rapport à une direction d'épaisseur **(D)** du substrat en film **(1)** est produite, le biais étant orienté de manière qu'une ouverture **(15)** qui s'élargit du côté extérieur **(2)** vers l'intérieur est produite lorsque le substrat en film **(1)** est mis en forme de tube.

4. Procédé selon l'une quelconque des revendications 1 à 3, **caractérisé en ce que**
les côtés de bord **(8')** longitudinaux sont mis en forme de manière que l'ouverture **(15)** forme un angle de 5° à 50°, de préférence de 10° à 40°.

5. Procédé selon l'une quelconque des revendications 1 à 4, **caractérisé en ce que**
les deux côtés de bord **(8')** longitudinaux du substrat en film **(1)** sont mis en forme de manière que les bouts **(9)** formés par le formage dans le cas du substrat en film **(1)** mis en forme de tube **(2)** viennent en contact l'un avec l'autre, notamment bord à bord.

6. Procédé selon l'une quelconque des revendications 1 à 5, **caractérisé en ce que**
dans le cadre d'une étape de rognage, au moins un côté de bord **(8)** longitudinal est coupé avec un outil de rognage, notamment avec un couteau de rognage, dans la direction longitudinale **(L)**, tout en produisant une bande de rognage **(12.1)** séparée du substrat en film **(1)**, la bande de rognage **(12.1)** étant disposée comme bande **(12)** à l'intérieur du substrat en film **(1)** mis en forme de tube dans la zone du joint des côtés de bord **(8, 8')** longitudinaux et/ou de la soudure longitudinale et étant soudée avec le substrat en film **(1)**, notamment avec les côtés de bord **(8, 8')** longitudinaux.

7. Procédé selon la revendication 6,
**caractérisé en ce que**
la bande de rognage **(12.1)** elle-même est coupée au moins d'un côté dans la direction longitudinale **(L)** avec des outils de rognage, notamment avec des couteaux de rognage, lors de ou après sa séparation du substrat en film **(1)**, notamment avant l'amenage à l'intérieur **(17)** du substrat en film **(1)** mis en forme de tube.

8. Procédé selon la revendication 6 ou 7,
**caractérisé en ce que**
la bande de rognage **(12.1)** est stockée temporairement sur un moyen de stockage entre sa séparation du substrat en film **(1)** et son insertion à l'intérieur **(17)** du substrat en film **(1)** mis en forme de tube.

9. Procédé selon l'une quelconque des revendications 1 à 8, **caractérisé en ce que**
la bande **(12)**, notamment la bande de rognage **(12.1)**, est chauffée moyennant des moyens de chauffage **(24a, 24b)** intérieurs et insérée à l'intérieur **(17)** du substrat en film **(1)** mis en forme de tube dans un état chauffé et, de cette façon, ramolli, de préférence plastiquement ramolli, et, notamment avant le soudage du côté extérieur (2) avec lui-même, vient en contact avec les côtés de bord **(8, 8')** longitudinaux.

10. Procédé selon la revendication 9,
**caractérisé en ce que**
la bande **(12)**, notamment la bande de rognage **(12.1)**, est élargie transversalement par rapport à la direction longitudinale **(L)** lors de la liaison au substrat en film de manière que le rapport d'une largeur après la liaison au substrat en film par rapport à une larguer initiale est supérieur à 1,5, de préférence, la bande **(12)** ou la bande de rognage **(12.1)** aussi étant aplatie, notamment en même temps, transversalement par rapport à la direction longitudinale **(L)** de manière que le rapport d'une hauteur après la liaison au substrat en film par rapport à la hauteur initiale est inférieur à 2/3.

11. Procédé selon l'une quelconque des revendications 1 à 9, **caractérisé en ce que**
la bande **(12)**, notamment la bande de rognage **(12.1)**, est mise sur une courroie **(21)** circulante sans fin moyennant des moyens d'amenage (27) et insérée à l'intérieur du substrat en film **(1)** mis en forme de tube, notamment sur la courroie **(21)**.

12. Corps de tube flexible pour des tubes d'emballage, notamment produit selon un procédé selon l'une quelconque des revendications 1 à 10, d'un substrat en film **(1)** qui a, de préférence, une impression sur le côté extérieur **(29)** et qui a au moins une couche de matière plastique soudable ou consiste en celle-ci et qui comprend un premier côté de bord **(8)** longitudinal s'étendant dans une direction longitudinale et un deuxième côté de bord **(8)** longitudinal parallèle par rapport à et espacé de celui-ci, le substrat en film **(1)** étant formé en forme de tube moyennant des moyens de formage **(23)** et les deux côtés de bord **(8)** longitudinaux étant soudés, notamment l'un avec l'autre, au moyen d'une soudure longitudinale, dans la zone du joint et/ou de la soudure longitudinale à l'intérieur **(17)** du substrat en film **(1)** mis en forme de tube, une bande **(12)** étant disposée et au moins par endroits ou par sections reliée aux côtés de bord **(8)** longitudinaux, notamment soudés avec ceux-ci,
**caractérisé en ce**
**qu'**au moins un côté de bord **(8')** longitudinal est mis en forme,
notamment coupé, de manière que les côtés de bord **(8, 8')** longitudinaux dans le cas du substrat en film **(1)** mis en forme de tube sont reliés directement l'un à l'autre radialement seulement dans la zone du côté extérieur **(2)** avec au moins un bout **(9)** formé par le formage.

13. Corps de tube selon la revendication 12,
**caractérisé en ce que**
l'au moins un côté de bord **(8')** longitudinal mis en forme du substrat en film **(1)** a une arête de coupe s'étendant obliquement par rapport à une direction d'épaisseur **(D)** du substrat en film **(1)**, le biais étant orienté de manière qu'une ouverture (15) qui s'élargit du côté extérieur **(2)** radialement vers l'intérieur est produite lorsque le substrat en film **(1)** est mis en forme de tube.

14. Corps de tube selon la revendication 12 ou 13,
**caractérisé en ce que**
les côtés de bord **(8')** longitudinaux sont mis en forme de manière que l'ouverture **(15)** forme un angle d'ouverture de 5° à 50°, de préférence de 10° à 40°.

15. Corps de tube selon l'une quelconque des revendications 12 à 14, **caractérisé en ce que**
l'ouverture **(15)** est partiellement, notamment à l'exception du côté extérieur (2) et/ou de la couche extérieure (3), remplie de matériau de la bande **(12)**.

16. Corps de tube selon l'une quelconque des revendications 12 à 15, **caractérisé en ce que**
les deux côtés de bord **(8')** longitudinaux du substrat en film **(1)** sont mis en forme de manière que les bouts **(9)** formés par le formage dans le cas du substrat en film **(1)** mis en forme de tube sont reliés directement l'un à l'autre, notamment bord à bord, radialement dans la zone du côté extérieur **(2)**.

17. Corps de tube selon l'une quelconque des revendications 12 à 16, **caractérisé en ce que**
la bande **(12)** est réalisée par une bande de rognage **(12.1)** du substrat en film **(1)**, ladite bande de rognage **(12.1)** étant séparée du substrat en film **(1)** dans le cadre d'un processus de rognage.

18. Dispositif pour la production de corps de tube flexibles pour des tubes d'emballage d'un substrat en film **(1)** qui a, de préférence, une impression sur le côté extérieur **(2)** et qui a au moins une couche de matière plastique soudable ou consiste en celle-ci et qui comprend un premier côté de bord **(8)** longitudinal s'étendant dans une direction longitudinale et un deuxième côté de bord **(8)** longitudinal parallèle par rapport à et espacé de celui-ci, le substrat en film **(1)** étant formé en forme de tube moyennant des moyens de formage **(23)** et les deux côtés de bord longitudinaux étant soudés, notamment l'un avec l'autre, formant ainsi une soudure longitudinale, dans la zone du joint et/ou de la soudure longitudinale à l'intérieur **(17)** du substrat en film **(1)** mis en forme de tube, une bande **(12)** étant disposée moyennant des moyens d'amenage et au moins par endroits ou par sections reliée aux côtés de bord **(8)** longitudinaux, notamment soudés avec ceux-ci, moyennant des moyens de liaison,
**caractérisé par**
des moyens de formage du bord pour mettre en forme, notamment couper, au moins un côté de bord **(8')** longitudinal avant que la soudure longitudinale soit formée, les moyens de formage **(23)** pour la formation de la forme de tube étant conçus de manière que les côtés de bord **(8, 8')** longitudinaux dans le cas du substrat en film **(1)** mis en forme de tube viennent en contact l'un avec l'autre, notamment bord à bord, radialement seulement dans la zone du côté extérieur **(2)** avec au moins un bout **(9)** formé par le formage.

19. Dispositif selon la revendication 18,
**caractérisé par**
des moyens de chauffage **(25)** extérieurs pour la liaison, notamment le soudage, du côté extérieur **(2)** du substrat en film **(1)** dans la zone de l'au moins un bout **(9)** des côtés de bord **(8')** longitudinaux dans le cadre de la formation de la soudure longitudinale, les moyens de chauffage **(25)** extérieurs étant disposés de manière que la liaison du côté extérieur **(2)** est effectuée après que le côté intérieur **(13)** opposé au côté extérieur **(2)** a été relié à, notamment soudé avec, la bandes **(12)**.

20. Dispositif selon la revendication 18 ou 19,
**caractérisé en ce que**
les moyens de formage du bord sont disposés et conçus de manière que, lorsque l'au moins un côté de bord **(8)** longitudinal du substrat en film **(1)** est mis en forme, une arête, notamment une arête de coupe, s'étendant obliquement par rapport à une direction d'épaisseur **(D)** du substrat en film **(1)** est produite, le biais étant orienté de manière qu'une ouverture **(15)** qui s'élargit du côté extérieur **(2)** vers l'intérieur est produite lorsque le substrat en film **(1)** est mis en forme de tube.

21. Dispositif selon l'une quelconque des revendications 18 à 20, **caractérisé par**
un outil de rognage, notamment avec un couteau de rognage, qui, au moins dans le cadre d'une étape de rognage, coupe un côté de bord **(8, 8')** longitudinal dans la direction longitudinale **(L)**, tout en produisant une bande de rognage **(12.1)** séparée du substrat en film **(1)**, la bande de rognage **(12.1)** étant disposée comme bande **(12)** à l'intérieur du substrat en film **(1)** mis en forme de tube dans la zone du joint des côtés de bord **(8, 8')** longitudinaux et/ou de la soudure longitudinale et étant soudée avec le substrat en film **(1)**, notamment avec les côtés de bord **(8, 8')** longitudinaux.

22. Dispositif selon l'une quelconque des revendications 18 à 21, **caractérisé par**
des moyens de chauffage intérieurs qui chauffent la bande **(12),** notamment la bande de rognage **(12.1),** notamment la chauffent jusqu'à un ramollissement plastique, les moyens de chauffage **(24)** intérieurs étant disposés de manière que la bande **(12)** est insérée à l'intérieur **(17)** du substrat en film **(1)** mis en forme de tube moyennant des moyens d'amenage dans un état chauffé et, de cette façon, ramolli, et vient en contact avec le côté intérieur (13), notamment aussi avec les côtés de bord **(8, 8')** longitudinaux.
